# EUROPÄISCHE PATENTSCHRIFT

(11) **EP 3 934 919 B1**
(45) Veröffentlichungstag und Bekanntmachung des Hinweises auf die Patenterteilung: **30.10.2024**
(21) Anmeldenummer: 20709131.5
(22) Anmeldetag: 28.02.2020
(51) Int. Cl.: B42D 25/342, B42D 25/351, B42D 25/36, B42D 25/369, B42D 25/373, B42D 25/29, B42D 25/425, B42D 25/43, B42D 25/45, G02B 3/00

(54) **LINSENPIGMENT, VERFAHREN ZUM HERSTELLEN DESSELBEN, WERTDOKUMENT UND DRUCKFARBE**
LENS PIGMENT, METHOD FOR PRODUCING SAME, VALUABLE DOCUMENT AND PRINTING INK
PIGMENT DE LENTILLE, PROCÉDÉ DE FABRICATION DE CELUI-CI, DOCUMENT DE VALEUR ET ENCRE D'IMPRESSION

(30) Priorität: 06.03.2019 DE 102019001570
(43) Veröffentlichungstag der Anmeldung: 12.01.2022
(73) Patentinhaber: Giesecke+Devrient Currency Technology GmbH, 81677 München (DE)
(72) Erfinder: PFEIFFER, Matthias, 81675 München (DE); FUHSE, Christian, 83624 Otterfing (DE); SCHERER, Maik, Rudolf, Johann, 82491 Grainau (DE)
(74) Vertreter: Giesecke+Devrient IP
(86) Internationale Anmeldenummer: PCT/EP2020/025100
(87) Internationale Veröffentlichungsnummer: WO 2020/177923

(56) Entgegenhaltungen:
- EP-A1- 2 062 947
- WO-A1-2010/015383
- WO-A1-2013/056825
- WO-A1-2017/187172

## Beschreibung

Die Erfindung betrifft ein für die drucktechnische Herstellung von Wertdokumenten, z.B. Banknoten, geeignetes Linsenpigment. Die Erfindung betrifft des Weiteren ein mit dem Linsenpigment versehenes Wertdokument, ein Verfahren zum Herstellen des Linsenpigments und eine das Linsenpigment enthaltende Druckfarbe.

Datenträger, wie Wert- oder Ausweisdokumente, oder auch andere Wertgegenstände, wie etwa Markenartikel, werden zur Absicherung oft mit Sicherheitselementen versehen, die eine Überprüfung der Echtheit des Gegenstands gestatten und die zugleich als Schutz vor unerlaubter Reproduktion dienen.

Der Begriff "Datenträger" umfasst auch nicht umlauffähige Vorstufen solcher Datenträger, die beispielsweise im Fall von Sicherheitspapier in quasi endloser Form vorliegen und zu einem späteren Zeitpunkt weiterverarbeitet werden. Datenträger im Sinne der vorliegenden Erfindung sind insbesondere Banknoten, Aktien, Anleihen, Urkunden, Gutscheine, Schecks, hochwertige Eintrittskarten, aber auch andere fälschungsgefährdete Papiere, wie Pässe und sonstige Ausweisdokumente, und auch kartenförmige Datenträger, insbesondere Chipkarten, sowie Produktsicherungselemente, wie Etiketten, Siegel, Verpackungen und dergleichen.

Ein Sicherheitselement kann in einen solchen Datenträger, beispielsweise in eine Banknote oder eine Chipkarte, eingebettet sein oder als selbsttragendes Transferelement ausgebildet sein, beispielsweise als Patch oder als Etikett, das nach seiner Herstellung auf einen zu sichernden Datenträger oder sonstigen Gegenstand aufgebracht wird.

Sicherheitselemente erzeugen häufig einen gut sichtbaren optischen Eindruck, weswegen solche Sicherheitselemente neben ihrer Funktion als Sicherungsmittel bisweilen auch ausschließlich als dekorative Elemente verwendet werden.

Um eine Fälschung oder Nachstellung von Sicherheitselementen beispielsweise mit hochwertigen Farbfotokopiergeräten zu verhindern, weisen Sicherheitselemente häufig optisch variable Elemente auf, die dem Betrachter unter verschiedenen Betrachtungswinkeln einen unterschiedlichen Bildeindruck vermitteln und etwa einen unterschiedlichen Farbeindruck oder auch unterschiedliche graphische Motive zeigen. In diesem Zusammenhang ist beispielsweise die Verwendung von beugungsoptischen Mikro- oder Nanostrukturen in Form von Prägehologrammen oder anderen hologrammähnlichen Beugungsstrukturen bekannt.

Zur Erzeugung optisch variabler Elemente ist weiterhin die Verwendung von Mikrolinsen-Anordnungen bekannt. Beispielsweise offenbart die EP 0 219 012 A2 eine regelmäßige Anordnung von parallelen, aneinanderstoßenden Zylinderlinsen, welche in Abhängigkeit von der Blickrichtung wegen der konvergierenden Wirkung der Zylinderlinsen nur einen streifenförmigen Bereich jeweils unterhalb einer Zylinderlinse zeigt. Unterhalb der Zylinderlinsen sind dabei streifenförmig zerlegte Bilder angeordnet, welche sich für einen Betrachter je nach Blickrichtung zu einem bestimmten Gesamtbild zusammensetzen. Je nach Betrachtungswinkel werden dabei bei horizontaler Anordnung der Zylinderlinsen verschiedene Bilder sichtbar, wodurch Kippbilder und Animationen erzeugt werden können. Liegen die Zylinderlinsen in vertikaler Richtung, so können stereoskopische Parallaxen in das Bild eingebracht werden, wodurch für den Betrachter ein räumlicher Eindruck erzeugt werden kann.

Neben der Verwendung von Zylinderlinsen ist auch die Verwendung einer regelmäßigen Anordnung von sphärischen Linsen bekannt, wie sie beispielsweise in einer Moiré-Vergrößerungsanordnung verwendet wird.

Die US 5 712 731 A betrifft die Verwendung einer solchen Moiré-Vergrößerungsanordnung als Sicherheitsmerkmal. Die dort beschriebene Sicherheitsvorrichtung weist eine regelmäßige Anordnung von im Wesentlichen identischen gedruckten Mikrobildern auf, sowie eine regelmäßige zweidimensionale Anordnung von im Wesentlichen identischen sphärischen Mikrolinsen. Die Mikrolinsenanordnung weist dabei im Wesentlichen dieselbe Teilung wie die Mikrobildanordnung auf. Wird die Mikrobildanordnung durch die Mikrolinsenanordnung betrachtet, so werden in den Bereichen, in denen die beiden Anordnungen im Wesentlichen im Register stehen, für den Betrachter eine oder mehrere vergrößerte Versionen der Mikrobilder erzeugt.

Die prinzipielle Funktionsweise derartiger Moiré-Vergrößerungsanordnungen ist in dem Artikel "The moire magnifier", M.C. Hutley, R. Hunt, R.F. Stevens and P. Savander, Pure Appl. Opt. 3 (1994), pp. 133-142, beschrieben. Kurz gesagt bezeichnet Moire-Vergrößerung danach ein Phänomen, das bei der Betrachtung eines Rasters aus identischen Bildobjekten durch ein Linsenraster mit annähernd demselben Rastermaß auftritt. Wie bei jedem Paar ähnlicher Raster ergibt sich dabei ein Moirémuster, das in diesem Fall als vergrößertes und gegebenenfalls gedrehtes Bild der wiederholten Elemente des Bildrasters erscheint. Weitere Ausgestaltungsvarianten und Effekte, die auf diesem Mechanismus beruhen, sind beispielsweise in dem Artikel "Properties of moire magnifiers", Kamal et al., Optical Engineering 37 (11), S. 3007-3014 (November 1998), beschrieben.

Regelmäßige Mikrolinsenanordnungen können auch als Verifikationsmittel für Sicherheitselemente verwendet werden, wie dies in der EP 1 147 912 B1 beschrieben ist. Dabei werden bestimmte Strukturen eines Sicherheitselementes erst bei Betrachtung durch ein solches Verifikationselement für den Benutzer sichtbar, sodass die Funktion des Sicherheitselements für einen unbefangenen Betrachter verborgen werden kann.

Zur Herstellung solcher Mikrolinsenanordnungen sind im Stand der Technik verschiedene Techniken bekannt. In der EP 1878 584 A2 wird dazu das Drucken eines optischen Lacks auf ein Trägersubstrat mithilfe einer Tiefdruckplatte offenbart. In der Tiefdruckplatte sind dabei Vertiefungen eingebracht, die die Negativform der gewünschten Linsenanordnung bilden. Weiterhin offenbart diese Schrift auch die Verwendung der Tiefdruckplatten als Prägewerkzeug, mit dessen Hilfe die gewünschte Mikrolinsenanordnung beispielsweise in eine Laminierschicht eingeformt wird. Derartige Verfahren sind auch in der EP 0 698 256 B2 beschrieben, wobei dort alternativ auch die Verwendung von Photoresistschichten in Verbindung mit geeigneten Masken zur Herstellung von Mikrolinsen offenbart wird.

In der DE 10 2006 003 798 A1 wird als weitere Alternative das partielle Auftragen einer Primerschicht genannt, welche eine bereichsweise Veränderung der Oberflächenspannung erzeugt, die zur Herstellung der Mikrolinsen verwendet werden kann.

Aus der letztgenannten Schrift, wie auch aus der WO 2006/016265 A1, ist als weitere Alternative ein Tintenstrahlverfahren bekannt, bei welchem ein transluzenter Kunststoff, beispielsweise ein optischer Lack, auf einer rauen Oberfläche mithilfe eines Tintenstrahl-Druckkopfs in Form von Mikrotröpfchen an den gewünschten Stellen positioniert wird. Bei diesem Verfahren müssen die verwendeten Materialien geeignete Oberflächenspannungen aufweisen, um ein Verlaufen der aufgebrachten flüssigen Mikrotröpfchen zu vermeiden.

Mikrolinsenanordnungen befinden sich üblicherweise auf Folienelementen wie etwa Folienstreifen, die mittels Verkleben auf das Sicherheitspapier aufgebracht werden. Solche Sicherheitsfolien sind teuer, ferner sind die Maschinen, die für das Aufbringen der Sicherheitsfolien auf das Sicherheitspapier erforderlich sind, nicht in jeder Papierfabrik oder Druckerei vorhanden. Des Weiteren wären individuell ausgestaltete Sicherheitselemente auf Basis von Mikrolinsenanordnungen wünschenswert.

Die WO 2017/187172 A1 beschreibt ein Sicherheitselement mit einer ersten Schicht, die aus einem im Wesentlichen transparenten ersten Material mit einem ersten Brechungsindex gebildet ist, wobei in einem ersten Bereich ein Feld aus fokussierenden Elementen gebildet ist, wobei in einem zweiten Bereich eine einen optisch variablen Effekt erzeugende Struktur gebildet ist, die die fokussierenden Elemente mindestens teilweise überlappt.

Die WO 2010/015383 A1 beschreibt ein Mikrolinsensubstrat, umfassend ein Trägersubstrat mit eingebrachten Erhebungen auf einer Vorderseite des Trägersubstrats und den Erhebungen im Wesentlichen entsprechenden Vertiefungen auf einer der Vorderseite gegenüberliegenden Rückseite des Trägersubstrats und eine Mehrzahl von Mikrolinsen, welche auf zumindest einer Seite des Trägersubstrats im Bereich der Erhebungen oder Vertiefungen angeordnet sind.

Die WO 2013/056825 A1 beschreibt ein Verfahren zum Herstellen von Mikrohohlspiegeln, umfassend die Schritte: Bereitstellen eines Trägersubstrats und Vorstrukturieren des Trägersubstrats, sodass auf einer Rückseite des Trägersubstrats Erhebungen entstehen und auf einer der Rückseite gegenüberliegenden Vorderseite des Trägersubstrats den Erhebungen im Wesentlichen entsprechende Vertiefungen entstehen; Auftragen einer reflektierenden Beschichtung auf zumindest eine Seite des Trägersubstrats im Bereich der Erhebungen oder Vertiefungen, sodass durch die Vertiefungen von der Vorderseite des Substrats aus gesehen Mikrohohlspiegel gebildet werden.

Die EP 2 062 947 A1 beschreibt opake Flakes, die in Farben verwendet werden, mit einer ausgewählten Gestalt und/ oder anderen Zeichen, um einem Gegenstand ein verstecktes Sicherheitsmerkmal zu verleihen. Bei der Herstellung der Flakes wird eine Folie mit eingeprägten Symbolen oder Zeichen bereitgestellt. Beim Entfernen einer Beschichtung von der geprägten Folie neigt das Beschichtungsmaterial dazu, entlang Rahmenlinien oder Rillen zu brechen, und die resultierenden Flakes sind im Wesentlichen gleichförmig in der Größe.

Davon ausgehend liegt der Erfindung die Aufgabe zugrunde, die Nachteile des Standes der Technik zu vermeiden und insbesondere ein Mikrolinsensubstrat bereitzustellen, das auch als ein Verifikationsmittel oder Sicherheitsmerkmal für einen Datenträger eingesetzt werden kann und welches einfach aufgebaut ist, sowie ein Verfahren zum Herstellen des Mikrolinsensubstrats.

Diese Aufgabe wird durch die in den unabhängigen Ansprüchen definierten Merkmalskombinationen gelöst. Weiterbildungen der Erfindung sind Gegenstand der abhängigen Ansprüche.

Zusammenfassung der Erfindung
1. (Erster Aspekt der Erfindung) Linsenpigment gemäß Anspruch 1.
2. (Zweiter Aspekt der Erfindung) Verfahren zum Herstellen des Linsenpigments gemäß Anspruch 11.
3. (Dritter Aspekt der Erfindung) Wertdokument, insbesondere eine Banknote, gemäß Anspruch 13.
4. (Vierter Aspekt der Erfindung) Druckfarbe gemäß Anspruch 15.

### Ausführliche Beschreibung der bevorzugten Ausführungsformen

Das erfindungsgemäße, mittels konventioneller Drucktechniken auf ein Wertdokumentsubstrat aufbringbare Linsenpigment umfasst ein einen Linsensockel bildendes Trägersubstrat, das auf seiner Vorderseite versehen ist mit einem ersten Kunststoff, der zumindest eine, eine Mikrolinse erzeugende Erhebung aufweist, und einem zweiten, den ersten Kunststoff einebnenden Kunststoff. Das erfindungsgemäße Linsenpigment ermöglicht eine kostengünstige Herstellung von auf Mikrolinsen basierenden Sicherheitselementen zur Absicherung von Wertdokumenten. Das Versehen von Wertdokumenten mit dem erfindungsgemäßen Linsenpigment kann darüber hinaus in jeder Druckerei vorgenommen werden, ohne dass spezielle Maschinen für das Aufbringen von Sicherheitsfolien auf Sicherheitspapier erforderlich sind. Das drucktechnische Aufbringen des erfindungsgemäßen Linsenpigments auf das Datenträgersubstrat ermöglicht darüber hinaus eine vielfältige Designfreiheit und somit eine erhöhte Fälschungssicherheit. Ferner können einzelne Wertdokumente, insbesondere Banknoten, mittels eines individuellen Bedruckens mit Linsenpigmenten in individualisierter Form bereitgestellt werden.

Geeignete Kunststoffe zur Herstellung des ersten Kunststoffs, der zumindest eine, eine Mikrolinse erzeugende Erhebung aufweist, und des zweiten, den ersten Kunststoff einebnenden Kunststoffs, sind im Stand der Technik bekannt, siehe z.B. die WO 2008/098753 A1 und die darin beschriebenen strahlenhärtenden Verbindungssysteme. Geeignete Abmessungen innerhalb von Mikrolinsenanordnungen mit fokussierenden Elementen, nämlich Mikrolinsen, in Form eines ersten Rasters und mikroskopischen Strukturen in Form eines zweiten Rasters, wobei die mikroskopischen Strukturen bei Betrachtung durch die fokussierenden Elemente in Vergrößerung zu sehen sind, werden z.B. in der WO 2006/087138 A1 beschrieben.

Das erfindungsgemäße Linsenpigment ist vorzugsweise so beschaffen, dass der erste Kunststoff eine Mehrzahl von jeweils eine Mikrolinse erzeugenden Erhebungen aufweist, wobei die Mehrzahl eine ganze Zahl in einem Bereich von 1 bis 12, weiter bevorzugt in einem Bereich von 1 bis 9 und insbesondere bevorzugt in einem Bereich von 1 bis 7 annimmt.

Das erfindungsgemäße Linsenpigment kann insbesondere einen im Wesentlichen spiegelsymmetrischen Aufbau besitzen, sodass das Trägersubstrat sowohl auf seiner Vorderseite als auch auf seiner Rückseite versehen ist mit einem ersten Kunststoff, der zumindest eine, eine Mikrolinse erzeugende Erhebung aufweist, und einem zweiten, den ersten Kunststoff einebnenden Kunststoff.

Das erfindungsgemäße Linsenpigment ist vorzugsweise so beschaffen, dass das einen Linsensockel bildende Trägersubstrat auf seiner Vorderseite und/oder seiner Rückseite mit (z.B. einer der Anzahl der Mikrolinsen entsprechenden Anzahl an) mikroskopischen Strukturen versehen ist, wobei die mikroskopischen Strukturen für den Betrachter infolge der fokussierenden Wirkung der Mikrolinsen in Form von Zeichen, Mustern oder Codierungen erkennbar sind. Die mikroskopischen Strukturen können insbesondere in Form von Mikrozeichen oder Mikromustern vorliegen. Die mikroskopischen Strukturen können dabei insbesondere drucktechnisch erzeugt werden, z.B. mittels Mikrodruck. Die mikroskopischen Strukturen können weiterhin in Form einer Metallisierung vorliegen und z.B. mittels Klebetransfer ausgehend von einer Metallspendefolie oder ausgehend von einer vollflächigen Metallisierung durch Strukturieren mittels eines Waschverfahrens oder mittels Laser-Demetallisierung erzeugt werden. Waschverfahren sind im Stand der Technik bekannt, siehe z.B. die EP 1 972 462 A2 und der darin zitierte Stand der Technik.

Im Falle von drucktechnisch erzeugten mikroskopischen Strukturen können einfarbige oder mehrfarbige mikroskopische Strukturen vorliegen. Auf diese Weise können Mikrobilder erzeugt werden, die bei senkrechter Betrachtung im Auflicht z.B. Weiß erscheinen und bei schräger Betrachtung (z.B. beim Verkippen des mit den Linsenpigmenten bedruckten Wertdokuments, z.B. eine Banknote) farbig erscheinen.

Im Falle von mikroskopischen Strukturen, die in Form einer Metallisierung gebildet vorliegen, ist insbesondere die spätere Individualisierung von Wertdokumenten mittels Laserstrahlung möglich. Die Laserstrahlung führt dabei zu einer Demetallisierung, sodass Zeichen, Muster oder Codierungen in die Bereiche des mit den Linsenpigmenten bedruckten Wertdokuments, z.B. eine Banknote, eingebracht werden können.

In einer alternativen Ausgestaltung können die mikroskopischen Strukturen in Form von geprägten Mikrostrukturen vorliegen. Zur Erzeugung der jeweils eine Mikrolinse bildenden Erhebungen sowie der geprägten Mikrostrukturen kommen unterschiedliche Verfahren zur Anwendung. Insbesondere können mithilfe klassischer Techniken der Halbleitertechnologie (Photolithographie, Elektronenstrahllithographie, Laserlithographie, Laserablation) geeignete Strukturen in Resistmaterialien belichtet, eventuell veredelt, galvanisch abgeformt und zur Fertigung von Prägewerkzeugen für die Folienprägung verwendet werden. Besonders geeignet zur Herstellung großer Flächen sind die bekannten Verfahren zur Prägung in thermoplastische Folien oder in mit strahlungshärtenden Lacken beschichtete Folien. Alternativ sind auch Techniken bekannt, Mikrolinsensysteme durch Ink-Jet-Druckverfahren oder durch Selbstorganisationsprozesse von Mikropartikeln auf Oberflächen aufzubringen.

Die geprägten Mikrostrukturen umfassen mit Vorteil Elemente, die in Form von sphärischen oder asphärischen Kalotten, Kegeln, Dreieckspyramiden, Trapezpyramiden, Kegelstümpfen, Pyramidenstümpfen oder dergleichen vorliegen, und/oder eine Basisfläche in Form von Zeichen, Mustern oder Codierungen aufweisen. Vorzugsweise besitzen die Mikrolinsen und gegebenenfalls die geprägten Mikrostrukturen kreisförmige oder elliptische Basisflächen.

In einer Weiterbildung der Erfindung sind die geprägten Mikrostrukturen in einen eingefärbten Prägelack, vorzugsweise einen eingefärbten opaken oder einen lasierend eingefärbten Prägelack, eingeprägt. Der eingefärbte Prägelack ist dabei mit Vorteil ein Farbpigmente enthaltender strahlungshärtender Lack. Die geprägten Mikrostrukturen können auch auf einem eingefärbten oder mit einer zusätzlichen Farbschicht versehenen Trägersubstrat angeordnet sein. Gemäß einer bevorzugten Variante können die geprägten Mikrostrukturen ferner mit einer opaken Beschichtung, vorzugsweise einer Metallschicht oder einer opaken Farbschicht, versehen sein.

In einer vorteilhaften Weiterbildung des erfindungsgemäßen Linsenpigments sind die Mikrolinsen und die mikroskopischen Strukturen derart zueinander angeordnet, dass ein visuell erkennbarer 2D-/3D-Effekt entsteht. Die mikroskopischen Strukturen umfassen dabei zweckmäßig geprägte Mikrostrukturen, die mit einer Reflexionsschicht, vorzugsweise einer Metallschicht, beschichtet sind. Zur Erhöhung des Fälschungsschutzes bietet es sich an, in der Reflexionsschicht Aussparungen in Form von Zeichen, Mustern oder Codierungen vorzusehen oder die Reflexionsschicht in Form von Zeichen, Mustern oder Codierungen auszubilden.

Die Mikrolinsen und gegebenenfalls auch die mikroskopischen Strukturen sind bei dem erfindungsgemäßen Linsenpigment auf einem Trägersubstrat angeordnet. Um die Mikrolinsen und die gegebenenfalls vorhandenen mikroskopischen Strukturen zueinander hinsichtlich eines geeigneten, auf die Brennweite der Mikrolinse abgestimmten Abstands auszurichten, kann eine Abstandsschicht und/oder Klebstoffschicht vorgesehen sein.

Das erfindungsgemäße Linsenpigment ist vorzugsweise so beschaffen, dass die Mikrolinsen in Form eines ersten Rasters angeordnet sind und die mikroskopischen Strukturen in Form eines zweiten Rasters angeordnet sind, wobei die Rasterweite des ersten und zweiten Rasters in einem Bereich von 3 µm bis 50 µm, vorzugsweise in einem Bereich von 5 µm bis 35 µm und insbesondere bevorzugt in einem Bereich von 10 µm bis 20 µm liegt.

Die Mikrolinsen können insbesondere als transmissive, refraktive oder diffraktive Linsen oder als eine Mischform daraus vorliegen.

Bezüglich des Brechungsindex des ersten Kunststoffs und des Brechungsindex des zweiten Kunststoffs besteht ein genügend großer Unterschied, um eine besonders vorteilhafte Linsenwirkung zu erzielen. Da Linsen typischerweise aus Lacken mit einem Brechungsindex von 1,2 bis 1,5 hergestellt werden, ist die Wirkung der Linsen stark, wenn die an die Linsen angrenzende Schicht z.B. mit einem Brechungsindex von 1 bereitgestellt wird. Freiliegende Linsen weisen allerdings den Nachteil auf, dass diese sich einerseits leicht abformen lassen und andererseits im Umlauf der mit dem Sicherheitselement versehenen Wertgegenstände durch Einwirkung von Schmutz, Chemikalien oder mechanischen Einflüssen leiden können. Es ist daher vorteilhaft, die Linsen einzubetten. Dazu werden erfindungsgemäß mit Bezug auf den zweiten Kunststoff hochbrechende Schutzschichten verwendet werden, welche Brechungsindizes aufweisen, die sich um wenigstens 0,3 von dem Brechungsindex der Linsen, d.h. des ersten Kunststoffs, unterscheiden. Es bieten sich hierfür z.B. Lacke an, die mit Nanopartikeln (z.B. aus Titanoxid, Aluminiumoxid, Zinkoxid oder Zinksulfid) gefüllt sind. Solche und ähnliche Systeme mit Brechungsindizes z.B. zwischen 1,7 und 2 sind kommerziell erhältlich. Hochbrechende Kunststoffe werden außerdem in der WO 2008/098753 A1 beschrieben. Die darin beschriebenen Kunststoffe basieren insbesondere auf UV-härtenden Verbindungssystemen und enthalten typischerweise Elemente wie Schwefel, Chlor, Brom oder Iod. Niedrigbrechende Kunststoffe hingegen enthalten mit Vorteil Fluor. Niedrigbrechende Kunststoffe können z.B. auch MgF₂-Nanopartikel aufweisen.

In einer bevorzugten Ausgestaltung sind die linsenförmigen Elemente mindestens teilweise mit einer Reflexionsschicht versehen und wirken so als eine Art Hohlspiegel.

Um eine automatische Echtheitsprüfung und gegebenenfalls eine weitergehende sensorische Erfassung und Bearbeitung der mit den erfindungsgemä-ßen Linsenpigmenten bedruckten Wertgegenstände zu ermöglichen, umfasst das erfindungsgemäße Linsenpigment vorzugsweise eine maschinenlesbare Schicht. Die maschinenlesbare Schicht enthält mit Vorteil maschinenlesbare Merkmalstoffe, insbesondere reflektierende, magnetische, elektrisch leitfähige, polarisierende, phasenschiebende oder lumineszierende, insbesondere phosphoreszierende oder fluoreszierende Stoffe.

Das erfindungsgemäße Linsenpigment ist vorzugsweise so beschaffen, dass die Vorderseite und/oder die Rückseite des einen Linsensockel bildenden Trägersubstrats, das mit dem ersten Kunststoff und gegebenenfalls mit mikroskopischen Strukturen versehen ist, eine opake Schicht, vorzugsweise eine metallische Schicht oder eine Druckschicht, aufweist. Die opake Schicht kann insbesondere durch ein Dünnschichtelement gebildet sein, wobei das Dünnschichtelement vorzugsweise ein farbkippendes Dünnschichtelement ist, insbesondere mit einem eine Reflektorschicht (z.B. eine Al-Schicht), eine dielektrische Abstandsschicht (z.B. SiO₂-Schicht) und eine Absorberschicht (z.B. eine Cr-Schicht) aufweisenden Aufbau.

Das Vorliegen der opaken Schicht ermöglicht insbesondere eine spätere Individualisierung der mit den Linsenpigmenten bedruckten Wertdokumente mittels Laserstrahlung. Die Laserstrahlung führt dabei zur Erzeugung von Zeichen, Mustern oder Codierungen innerhalb der opaken Schicht.

Das erfindungsgemäße Linsenpigment ist vorzugsweise so beschaffen, dass das einen Linsensockel bildende Trägersubstrat eine runde Form, insbesondere eine kreisförmige oder eine elliptische Form, oder die Form eines Vielecks, insbesondere eine quadratische, rechteckige, dreieckige, pentagonale oder hexagonale Form aufweist.

Das einen Linsensockel bildende Trägersubstrat kann z.B. in Form eines UV-härtenden Lacks oder in Form einer Trägerfolie, z.B. eine PET-Folie, vorliegen. Im Falle einer Folie kann die Brüchigkeit gegebenenfalls durch Hinzufügen von Füllstoffen oder mittels ionisierender Strahlung erhöht werden, um das Zerkleinern des anfänglichen Mehrschichtkörpers zu einzelnen Pigmenten während der Herstellung zu erleichtern.

Es wird bevorzugt, dass das einen Linsensockel bildende Trägersubstrat zusätzlich eine magnetische Schicht aufweist. Auf diese Weise können magnetisch orientierbare Pigmente bereitgestellt werden, sodass entsprechend der mittels eines Magneten erzielten Orientierung der einzelnen Linsenpigmente eindrucksvolle, vom Betrachtungswinkel abhängige optische Eigenschaften des mit den Linsenpigmenten bedruckten Datenträgers erzielbar sind.

Die vorliegende Erfindung umfasst weiterhin ein Verfahren zum Herstellen des erfindungsgemäßen Linsenpigments, umfassend:
- das Bereitstellen eines Trägersubstrats;
- das Versehen des Trägersubstrats mit einem ersten Kunststoff;
- das Strukturieren des ersten Kunststoffs, um auf diese Weise Erhebungen zu bilden, die jeweils eine Mikrolinse erzeugen;
- das Aufbringen eines zweiten, den ersten Kunststoff einebnenden Kunststoffs;
- das Zerbrechen des in den vorangehenden Schritten erzeugten Schichtaufbaus in eine Vielzahl von Linsenpigmenten.

Das Strukturieren des ersten Kunststoffs erfolgt vorzugsweise mittels Verprägen.

Die vorliegende Erfindung umfasst weiterhin ein Wertdokument, insbesondere eine Banknote, das mit erfindungsgemäßen Linsenpigmenten bedruckt ist. Das Wertdokumentsubstrat ist insbesondere ein Papiersubstrat, ein Papier-ähnliches Substrat, ein Polymersubstrat, ein Papier/Folie/Papier-Verbundsubstrat oder ein Folie/Papier/Folie-Verbundsubstrat.

Die Linsenpigmente werden vorzugsweise in einem Fensterbereich des Wertdokuments angeordnet. Der Fensterbereich kann z.B. durch ein Folienelement gebildet werden, das im Bereich einer Aussparung im opaken, z.B. aus Papier gebildeten, Wertdokumentsubstrat angeordnet ist. Im Falle eines auf einem transparenten Polymersubstrat basierenden Wertdokuments kann ein Fensterbereich z.B. mittels deckungsgleicher Aussparungen in den auf der Vorder- und Rückseite des Polymersubstrats aufgebrachten opaken Druckschichten erzeugt werden.

Ein bevorzugtes Verfahren zur Herstellung der erfindungsgemäßen Pigmente umfasst die folgenden Schritte:
- Erstellen einer Pigmentschicht auf einem Ausgangssubstrat;
- Lösen von dem Ausgangssubstrat; und
- Strukturieren der Pigmentschicht in eine Vielzahl der Pigmente.

Mit dem Begriff "Pigmentschicht" ist insbesondere die das Pigment bildende Schichtenfolge gemeint, umfassend zumindest das einen Linsensockel bildende Trägersubstrat, das auf seiner Vorderseite versehen ist mit einem ersten Kunststoff, der zumindest eine, eine Mikrolinse erzeugende Erhebung aufweist, und einen zweiten, den ersten Kunststoff einebnenden Kunststoff.

Vorliegend wird die Pigmentschicht in geeigneter Weise mit einem Zwischensubstrat in Kontakt gebracht. Die Pigmentschicht haftet mindestens abschnittsweise an dem Zwischensubstrat an. Danach werden Zwischensubstrat und Ausgangssubstrat wieder voneinander getrennt.

Insbesondere kann die vorgegebene Kontur des Pigments dabei eine Außenkontur (Umriss des Pigments) umfassen. Die Außenkontur des Pigments begrenzt das Pigment. Ebenso kann die vorgegebene Kontur des Pigments eine Innenkontur aufweisen. Die Innenkontur des Pigments begrenzt eine Öffnung im Pigment. Das Verfahren ermöglicht es, Pigmente mit komplexerer Außenkontur bereitzustellen als das herkömmliche Brechen der Pigmentschicht. Zudem können Pigmente mit Innenkontur, also mit einer umlaufenden Bruchkante, welche eine Öffnung innerhalb des Pigments begrenzt, durch Brechen hergestellt werden.

Durch den Kontakt mit dem Zwischensubstrat sind die Pigmente (bzw. Pigmentabschnitte der Pigmentschicht) für den Schritt des Lösens und/oder des Strukturierens gegen Zerbrechen geschützt.

Bevorzugt wird die Pigmentschicht durch den Schritt des Trennens von Zwischensubstrat und Ausgangssubstrat in die Vielzahl der Pigmente strukturiert. Beim Trennen bricht die Pigmentschicht in die Vielzahl der Pigmente mit vorgegebener Kontur.

Gemäß dem bevorzugten Verfahren werden im Schritt des Trennens bevorzugt mindestens 2 000 Pigmente, besonders bevorzugt mindestens 5 000 Pigmente und weiter bevorzugt mehr als 10 000 Pigmente gleichzeitig aus der Pigmentschicht strukturiert (bzw. herausgebrochen). Diese Anzahl wird bevorzugt jeweils entlang einer Trennlinie gleichzeitig strukturiert.

Insbesondere umfasst die Pigmentschicht Pigmentabschnitte und Restabschnitte. Die Pigmentabschnitte haben die Kontur der Pigmente. Die Pigmentabschnitte sind voneinander beabstandet, insbesondere durch den Restabschnitt. Die Restabschnitte haben eine zu den Pigmentabschnitten inverse Kontur. Optional können die Restabschnitte miteinander verbunden sein. Im Schritt des Trennens bricht die Pigmentschicht und entweder die Pigmentschichtabschnitte oder die Restabschnitte werden von dem Ausgangssubstrat gelöst. Die jeweils anderen Abschnitte - also die Restabschnitte oder die Pigmentschichtabschnitte respektive - liegen auch nach dem Trennen auf dem Ausgangssubstrat.

Gemäß dem bevorzugten Verfahren können Pigmente mit der vorgegebenen Kontur in hoher Reinheit hergestellt werden. Der Grad der Reinheit kann in Gewichtsprozent angegeben werden. Die Pigmente mit vorgegebener Kontur bilden mehr als 90%, vorzugsweise mehr als 95%, der Gewichtsmasse umfassend die Pigmente und Verunreinigungen, welche insbesondere durch Bruchstücke der Pigmentschicht und nur geringfügig durch Pigmente mit beschädigter Kontur gebildet werden. Verunreinigungen mit Bruchstücken werden insbesondere vermieden, da die Restabschnitte der Pigmentschicht (oder die Pigmentabschnitte) auf dem Ausgangssubstrat haften bleiben.

In der bevorzugten Ausgestaltung werden die Pigmente (bzw. die Pigmentschichtabschnitte der Pigmentschicht) durch den Schritt des Trennens von dem Ausgangssubstrat gelöst. Die Pigmente werden vom Ausgangssubstrat auf das Zwischensubstrat übertragen und sind zum Zeitpunkt des Brechens durch das Zwischensubstrat geschützt. Die Pigmente werden anschließend vom Zwischensubstrat gelöst.

In einer anderen Ausgestaltung liegt die Vielzahl der Pigmente nach dem Trennen (bzw. die Pigmentschichtabschnitte der Pigmentschicht) weiterhin auf dem Ausgangssubstrat vor. Die Pigmente werden anschließend vom Ausgangssubstrat gelöst. Im Schritt des Trennens bricht die Pigmentschicht und die Restabschnitte werden vom Ausgangssubstrat gelöst.

Lediglich alternativ zu den vorgenannten Ausgestaltungen wird die Pigmentschicht bereits vor dem Schritt des Trennens strukturiert. In dem Schritt des Trennens werden aus der bereits strukturierten Pigmentschicht entweder die Pigmentschichtabschnitte oder die Restabschnitte von dem Ausgangssubstrat gelöst. Die Pigmente werden zum Zeitpunkt des Lösens durch das Zwischensubstrat (und das Ausgangssubstrat) geschützt.

Im Ausgangssubstrat und/oder dem Zwischensubstrat kann zweckmäßigerweise eine Reliefstruktur erstellt werden, welche die Kontur der Pigmente vorgibt. Die Reliefstruktur umfasst insbesondere erhabene Abschnitte, in welchen die Pigmentschicht mit einer Haftschicht (des jeweils anderen Substrates) in Kontakt kommt und anhaftet, und vertiefte Abschnitte, mit welchen ein Kontakt der Pigmentschicht mit dieser Haftschicht vermieden wird. Entweder die Vertiefungen oder die Erhebungen werden mit der Kontur der Pigmente vorgesehen. Die Reliefstruktur kann durch Prägen, Lasern oder Ätzen erstellt werden. Da die Reliefstruktur (und/ oder eine im Folgenden noch erläuterte Haftungsstruktur) noch nicht zu Einzelpigmenten führt, wird diese vorliegend auch als Vorstrukturierung bezeichnet. Die Höhe der Reliefstruktur ist vorzugsweise größer als die Höhe der Pigmentschicht. Insbesondere ist die Reliefstruktur in seiner Höhe (Differenz zwischen den planen Erhebungen und Vertiefungen) an die Höhe der Pigmentschicht und/oder die Haftschicht, insbesondere deren Höhe und Viskosität, angepasst. Die Anpassung bewirkt, dass selektiv nur in den erhabenen Abschnitten die Pigmentschicht an dem Zwischensubstrat anhaftet (oder stärker anhaftet als an dem Ausgangssubstrat). Das Strukturieren der Pigmentschicht in Einzelpigmente erfolgt durch das Brechen der Pigmentschicht mit den durch die Vorstrukturierung definierten, für die Pigmente vorgegebenen Konturen.

Das Ausgangssubstrat kann - vorzugsweise vor, aber alternativ auch nach, dem Erstellen der Pigmentschicht auf dem Ausgangssubstrat - mit der Reliefstruktur versehen werden. Die Reliefstruktur kann insbesondere durch Prägen erstellt werden, vorzugsweise durch Prägen in eine härtbare (Lack-) Schicht, die nach dem Prägen, beispielsweise mittels UV-Licht, ausgehärtet wird. Im Ausgangssubstrat ohne Pigmentschicht kann die Reliefstruktur alternativ auch durch Ätzen oder Lasern erstellt werden. Entsprechend der Reliefstruktur umfasst die Pigmentschicht auf dem vorstrukturierten Ausgangssubstrat Pigmentabschnitte und Restabschnitte. Nach dem in-Kontakt-Bringen mit dem Zwischensubstrat haften die erhabenen Abschnitte an der Haftschicht des Zwischensubstrats. Vorzugsweise sind die Pigmentabschnitte die erhabenen Abschnitte, welche - durch die Haftung an dem Zwischensubstrat stabilisiert sind und - beim Trennen der Substrate aus der Pigmentschicht brechen, an dem Zwischensubstrat haften bleiben und sich vom Ausgangssubstrat lösen.

Wird das Zwischensubstrat mit der Reliefstruktur versehen, entstehen analog erhabene oder vertiefte Abschnitte der Haftschicht des Zwischensubstrates. In einer ersten Alternative wird das Zwischensubstrat mit der Reliefstruktur versehen und anschließend mit der Haftschicht beschichtet. Bevorzugt wird die Reliefstruktur geprägt, insbesondere in eine Prägelackschicht des Zwischensubstrates geprägt. In einer zweiten Alternative wird die Zwischensubstrat zusammen mit der Haftschicht vorstrukturiert, also beispielsweise geprägt. Wiederum lösen sich entweder die Pigmentabschnitte oder die Restabschnitte vom Ausgangssubstrat, weil sie an der Haftschicht des Zwischensubstrats haften bleiben.

Anstelle - oder optional zusätzlich zu - der Reliefstruktur kann eine Haftstruktur als Vorstrukturierung dienen. Auf der Pigmentschicht, dem Ausgangssubstrat und/oder dem Zwischensubstrat wird eine Haftstruktur erstellt, welche die Kontur der Pigmente vorgibt. Als eine solche Vorstrukturierung kann entweder eine haftvermittelnde Haftstruktur oder auch eine haftungsverhindernde Anti-Haftstruktur dienen. Beispielsweise könnte die Haftschicht des Ausgangssubstrates vorstrukturiert werden, insbesondere durch selektives Entfernen oder Deaktivieren mittels Laser oder durch selektiven Anti-Haftaufdruck. Entsprechend der Vorstrukturierung bleiben wiederum vorzugsweise die Pigmente, also die Pigmentabschnitte der Pigmentschicht, an dem Zwischensubstrat haften und lösen sich vom Ausgangssubstrat.

Das Zwischensubstrat umfasst zumindest eine Zwischensubstratschicht. In der Regel umfasst das Zwischensubstrat die Zwischensubstratschicht und eine Haftschicht. Die Haftschicht des Zwischensubstrats ist so ausgebildet, dass die Pigmentschicht stärker an der Haftschicht des Zwischensubstrats haftet als an dem Ausgangssubstrat (bzw. dessen Haft- oder Antihaftschicht). Das Ausgangssubstrat umfasst zumindest eine Ausgangssubstratschicht. In der Regel umfasst das Ausgangssubstrat die Ausgangssubstratschicht und eine Haft- oder Antihaftschicht. Die Haftschicht des Ausgangssubstrats kann durch einen Lack gebildet sein. Die Ausgangssubstratschicht umfasst bevorzugt eine Folie - insbesondere eine Kunststoff-Folie, wie PET-Folie - sowie eine gehärtete Prägelackschicht. Die Ausgangssubstratschicht und/oder die Zwischensubstratschicht liegt vorzugsweise als (Folien-)Bahn mit einer Mindestbreite von 20 cm, insbesondere 50 cm und besonders bevorzugt 100 cm, vor. Die Folienbahn kann eine Breite von 200 cm aufweisen. Die Bahn hat eine Mindestlänge von 10 Metern, vorzugsweise 100 Meter. Sie kann auf einer Rolle bereitgestellt werden.

Die Pigmentschicht umfasst mehrere Teilschichten, die optional ihrerseits aus Unterschichten gebildet sein können. Die Pigmentschicht umfasst insbesondere ein einen Linsensockel bildendes Trägersubstrat, das auf seiner Vorderseite versehen ist mit einem ersten Kunststoff, der zumindest eine, eine Mikrolinse erzeugende Erhebung aufweist, und einem zweiten, den ersten Kunststoff einebnenden Kunststoff. Das Trägersubstrat ist insbesondere eine Schicht erhöhter Stabilität (die nachstehend auch "Trägerschicht" genannt wird) und kann insbesondere durch einen gehärteten Lack gebildet sein.

Das Pigment kann ein Zusatzmotiv enthalten, welches vorzugsweise passergenau zur Kontur des Pigmentes angeordnet ist und/oder eine von der Pigmentkontur unabhängige Kontur aufweist. Die passergenaue Anordnung kann insbesondere ohne zusätzlichen Aufwand erreicht werden, wenn das Zusatzmotiv in dem Schritt des Erstellens der Reliefstruktur zumindest teilweise mit erstellt wird. Beispielsweise kann mit einer Prägung des Ausgangssubstrates sowohl das Relief als auch eine optisch wirksame Reliefstruktur des Zusatzmotivs eingebracht werden. Eine Kontur des Zusatzmotives kann der (Außen- oder Innen-)Kontur des Pigments in einem festen Abstand folgen. Das Zusatzmotiv kann durch die Oberflächenstruktur gebildet sein. Die Oberflächenstruktur besitzt eine geringere Tiefenmodulation, beispielsweise von 3 nm bis zu ca. 500 nm, als der konturbestimmende Anteil der Reliefstruktur. Das Zusatzmotiv kann Subwellenlängenstrukturen, wie Mottenaugenstrukturen, und / oder diffraktive Strukturen, wie holographische Gitter aufweisen, wobei letztere typische Perioden zwischen 500 nm und 1,5 µm haben. Insbesondere kann das Zusatzmotiv Mikrospiegel enthalten. Diese können in ihrer Form durch die Prägung bestimmt sein und reflektierend (Metall- oder HRI-Schicht) beschichtet werden. Alternativ ist die Kontur des Zusatzmotives unabhängig von der Kontur des Pigmentes, kann also frei gewählt werden. So kann beispielsweise eine durchgehende Teilschicht der Pigmentschicht erstellt werden, die entlang der Pigmentkontur bricht, und eine zusätzliche, nicht durchgehende, Teilschicht der Pigmentschicht erstellt werden, welche beispielsweise das Zusatzmotiv darstellt.

Die aus der Pigmentschicht entstandenen Pigmente können als flächige Pigmente oder plättchenförmige Pigmente bezeichnet werden. Die Außenkontur kann nahezu beliebige Formen aufweisen, soweit das Pigment eine ausreichende Stabilität für die weitere Verarbeitung aufweist. Auch die Innenkontur, also Öffnungen, kann mit beliebiger Größe und Geometrie gewählt werden.

Selbstverständlich sind (die) Pigmente für ein Drucken der Pigmente vorgesehen. Die - insbesondere von dem Ausgangs- und/oder dem Zwischensubstrat gelösten - Pigmente werden zu einer Druckfarbe verarbeitet. Eine Druckfarbe mit den Pigmenten wird gedruckt. Bevorzugt erfolgt der Druck als Siebdruck, dabei insbesondere mittels zonalem Rakeln. Alternativ kann das Pigment mittels Tiefdruck und optional mittels Flexodruck verdruckt werden. Die Druckfarbe umfasst die Pigmente sowie zumindest ein Lösungsmittel sowie optional ein Bindemittel. Insbesondere wenn die erzeugten Pigmente eine Pigmentgröße von weniger als 15 µm, vorzugsweise weniger als 10 µm, aufweisen, kann die Druckfarbe in einem Offsetdruckverfahren verwendet werden.

Im Vergleich zu anderen Herstellungsverfahren können vorliegend Pigmente mit erhöhter Komplexität selbst bei geringerer Größe und Dicke, insbesondere mit gleichbleibend hoher Zuverlässigkeit, erreicht werden. Das Pigment weist eine Größe bzw. laterale Ausdehnung von weniger als 100 µm, insbesondere weniger als 50 µm, besonders bevorzugt unter 30 µm auf. Die aktuell erzielbaren Pigmentgrößen beginnen bei wenigen 100 nm. Absehbar sind Pigmente mit Größen möglich zwischen 100 nm bis 100 µm, bevorzugt zwischen 200 nm und 50 µm, besonders bevorzugt zwischen 200 nm (bzw. 2 µm) und 30 µm. Die Dicke der Pigmente liegt im Bereich von 30 nm bis 4 µm (bzw. bis 2 µm), bevorzugt zwischen 100 nm und 1 µm.

Die Außenkontur des Pigments kann insbesondere Abweichungen von einer regelmäßigen Außenkontur aufweisen. Als regelmäßige Außenkonturen werden alle Grundformen vom einfachen Vieleck (mit 3 bis n Ecken) einschließlich einem Kreis betrachtet. Ausbuchtungen bzw. Einbuchtungen, die von der regelmäßigen Grundform abweichen, haben z.B. die folgenden typischen Größen: 100 nm bis 30 µm, bevorzugt 300 nm bis 10 µm und besonders bevorzugt 500 nm bis 5 µm. Abweichungen von einer regelmäßigen Außenkontur bilden Schwachstellen im Pigment. Das Pigment wird somit - ohne Anwendung des vorliegenden bevorzugten Verfahrens - schneller an seiner Schwachstelle innerhalb des Pigments als an seiner Außenkontur brechen. Bezogen auf die Pigmentgröße, die maximale Größe des Pigments in einer Richtung, reduziert die mindestens eine Einbuchtung das Pigment an einer Schwachstelle auf z.B. 5% bis 66%, bzw. 5% bis 49% der Pigmentgröße. Das Pigment hat an seiner schmalsten Stelle somit nur noch z.B. 5% bis 66%, bevorzugt 5% bis 49%, besonders bevorzugt zwischen 5 und 24%, der Pigmentgröße. Analog bilden Ausbuchtungen bezogen auf die Pigmentgröße entsprechend schmale Stellen (Schwachstellen) im Pigment. Ausbuchtungen (und/oder Einbuchtungen) bilden eine Schmalstelle im Pigment, welche in einem Abstand von z.B. mehr als 3%, bevorzugt mehr als 6%, besonders bevorzugt mehr als 12%, der Pigmentgröße von der Außenkontur entfernt liegt. Entsprechend beträgt die Mindestlänge der Ausbuchtung (gemessen vom Pigmentzentrum bzw. Schwerpunkt zur Außenkontur) z.B. 3% (6% bzw. 12%) der Pigmentgröße. Die Ausbuchtung ist an der Schmalstelle z.B. nur 1% bis 33%, bevorzugt 1% bis 15%, besonders bevorzugt 1% bis 5% der Pigmentgröße breit. Die Ausbuchtung weist an der Schmalstelle einen Öffnungswinkel, gebildet von den Rändern der Ausbuchtung, von z.B. weniger als 60 Grad, bevorzugt weniger als 45 Grad, besonders bevorzugt weniger als 30 Grad auf. Der Öffnungswinkel an der Schmalstelle kann Null sein, beispielsweise im Falle einer rechteckigen Ausbuchtung (mit parallelen Rändern) oder negativ sein, beispielsweise im Falle einer sich nach außen verbreiternden Ausbuchtung.

Eine vorgegebene, gegebenenfalls vorhandene Innenkontur (Öffnung im Pigment) des Pigments kann die vorgegebene Kontur darstellen oder die vorgegebene Außenkontur des Pigments ergänzen. Die Öffnung kann dabei z.B. als regelmäßiges Vieleck (Dreicek, Viereck, ... n-Eck), Kreis, Oval, unregelmäßiges Vieleck (wie Trapez), Symbol (mit Ecken und Rundungen) oder Text ausgestaltet sein. Vorzugsweise folgt die Öffnung der Außenkontur (teilweise oder vollständig) und/oder folgt die Öffnung einer Zusatzinformation auf dem Pigment.

Die gegebenenfalls vorhandene Innenkontur weist z.B. eine Größe von mindestens 100 nm auf. Das Pigment weist zwischen gegebenenfalls vorhandener Innenkontur und Außenkontur vorzugsweise einen Mindestbreite von 300 nm, insbesondere 500 nm bzw. 1 µm auf, insbesondere eine Breite von 300 nm bis 10 µm, besonders bevorzugt 500 nm bis 5 µm auf. Bezogen auf die Pigmentgröße weist das Pigment an seiner schmalsten Stelle zwischen Außenkontur und gegebenenfalls vorhandener Innenkontur vorzugsweise eine Breite von weniger als 66%, bevorzugt unter 30%, besonders bevorzugt unter 10%, der Pigmentgröße auf.

In der Regel werden Pigmente mit identischer Kontur hergestellt. In einer vorteilhaften Ausgestaltung werden aus einer Pigmentschicht gleichzeitig Pigmente mit zwei (oder drei oder mehr als drei) unterschiedlichen vorgegebenen Konturen hergestellt. In Weiterbildungen umfassen die gleichzeitig hergestellten Pigmente (zumindest) eine einheitliche, vorgegebene Außenkontur und gegebenenfalls mindestens zwei unterschiedliche Innenkonturen für die einheitliche, vorgegebene Außenkontur oder (zumindest) eine einheitliche, vorgegebene, gegebenenfalls vorhandene Innenkontur und mehrere unterschiedliche Außenkonturen für die einheitliche, vorgegebene, gegebenenfalls vorhandene Innenkontur. Beispielsweise kann die einheitliche Außenkontur ein erstes (supra-) nationales Symbol darstellen und die gegebenenfalls vorhandene Innenkontur regionale (oder entsprechend nationale) Symbole darstellen.

Als eine gegebenenfalls vorhandene optische Effektschicht des Pigments kann eine Metallschicht verwendet werden, beispielsweise aus Aluminium, Chrom, Kupfer, Eisen, Nickel, Kobalt, Silber, Gold oder aus Legierungen der vorgenannten Metalle. Die Dicke der Metallschicht liegt insbesondere zwischen 2 nm und 200 nm, bevorzugt zwischen 10 nm und 50 nm, besonders bevorzugt zwischen 15 nm und 30 nm.

Die optische Effektschicht kann als reflektierende oder semitransparente Schicht ausgebildet sein, anstelle einer Metallschicht kann dabei eine hochbrechende Schicht (HRI-Schicht) vorgesehen werden. Bevorzugt umfasst das Pigment einen Dreischichtaufbau, der als farbkippendes und/oder farbfilternder Aufbau gestaltet sein kann. Das Pigment kann durch den Dreischichtaufbau gebildet sein, oder den Dreischichtaufbau als tragende Teilschicht bzw. als optisch aktive Teilschicht umfassen. Bevorzugt bestehen die Dreischichtaufbauten aus einer semitransparenten Metallschicht, einem Dielektrikum und einer reflektierenden (oder semitransparenten) Metallschicht. Als Dielektrika werden zum Beispiel SiO2, ZnS, MgF2 oder TiO2 verwendet.

Besonders bevorzugt sind zumindest die optisch aktiven Teilschichten des Pigments symmetrisch zur Pigmentebene vorgesehen. Somit ist eine Orientierung des Pigments nach dem Druckvorgang unerheblich. Beispielsweise kann das Pigment durch zwei identische semintransparente Teilschichten mit einer tragenden Abstandsschicht gebildet sein. Solche Pigmente weisen bevorzugt in Aufsicht einen metallischen Glanz mit einem bestimmten Farbspektrum auf, während sie in Durchsicht ein zu diesem Farbspektrum komplementäres Spektrum zeigen, besonders bevorzugt Gold in Aufsicht und Blau in Durchsicht. In einer anderen Variante sind symmetrisch um eine gemeinsam genutzte reflektierende Schicht (oberhalb und unterhalb) jeweils eine dielektrische und eine semitransparente Schicht vorgesehen.

Damit die Pigmente in ihrer Orientierung durch ein Magnetfeld beeinflussbar sind, kann eine magnetische Schicht verwendet werden, die beispielsweise aus den Metallen Eisen, Nickel, Kobalt oder Legierungen, welche diese Metalle enthalten, gebildet werden können. Solche Legierungen enthalten bevorzugt weitere Elemente wie Si, Nd, B, Gd, Sm, Sr, Ba oder Mn. Die magnetische Schicht befindet sich vorteilhaft im Inneren der Pigmente. In einer besonders vorteilhaften Variante ist die magnetische Teilschicht zwischen zwei reflektierenden Teilschichten, beispielsweise aus Aluminium, vorgesehen. Besonders bevorzugt weisen die Pigmente eine zentrale magnetische Schicht auf, die beidseitig (symmetrisch) mit einem Dreischichtaufbau versehen ist, also insbesondere auf beiden Seiten jeweils - von innen nach außen - eine reflektierende Schicht (vorzugsweise eine reflektierende metallische Schicht), eine Abstandsschicht (vorzugsweise eine dielektrische Schicht) und eine Absorberschicht (vorzugsweise eine semitransparente metallische Schicht) umfasst.

Gemäß dem vorliegenden, bevorzugten Verfahren können Pigmente erstellt werden, mit
- einer das Pigment begrenzenden Bruchkante, welche eine Bruchkraft repräsentiert, die größer ist als eine entsprechende Bruchkraft für das Pigment, und/ oder
- einer innenliegenden Bruchkante, welche eine Öffnung im Pigment begrenzt.

Die Bruchkraft des Pigments wird durch seine schmalste Stelle bestimmt. Das Pigment kann somit leichter in seiner Außenkontur zumindest einen spitzen Winkel mit einem Winkel z.B. kleiner 45 Grad, vorzugsweise kleiner 30 Grad, aufweisen oder eine sich zum Pigmentzentrum verjüngende Außenkontur aufweisen. Derartige Außenkonturen waren bisher problematisch und allenfalls mit stark erhöhtem Aufwand, wie im Vergleich zur Dicke der Pigmentschicht sehr dünnen Sollbruchstellen, denkbar. Die Bruchkraft des Pigments ist vorliegend z.B. mindestens um einen Faktor 1,1, vorzugsweise 1,5, besonders bevorzugt um einen Faktor 2 kleiner als die Bruchkraft der Bruchkante. Die Bruchkraft der Bruchkante kann ausgehend von einer Bruchkraft der Pigmentschicht (Messwert) anhand der Bruchkanten(ober)fläche und der Kontur bestimmt werden (Berechnung). Bestimmt oder gemessen wird eine Bruchkraft als maximal anwendbare Kraft bis das Messobjekt bricht. Vorliegend wird das Pigment vorzugsweise an zwei Punkten belastet, die jeweils in vorgegebenem Abstand zu einem Auflagepunkt oder einer Auflagelinie des Pigments liegen. Zumindest näherungsweise entspricht das Verhältnis der Bruchkräfte dem Verhältnis der Bruchflächen. Die Pigmentquerschnittsfläche an der schmalsten Stelle des Pigments, also insbesondere Breite der Schwachstelle des Pigments mal Höhe der Pigmentschicht, kann vorliegend kleiner sein als die Oberfläche der Bruchkante des Pigments an seiner Außenkontur, also insbesondere Länge der Bruchkante mal Höhe der Bruchkante.

Die innenliegende Bruchkante bildet die gegebenenfalls vorhandene Innenkontur des Pigments. Die das Pigment begrenzende Bruchkante bildet die Außenkontur des Pigments.

Eine die erfindungsgemäßen Linsenpigmente enthaltende Druckfarbe kann die Linsenpigmente insbesondere in verkapselter Form enthalten. Auf diese Weise können insbesondere sphärische Mikrokapselpigmente erzeugt werden, bei denen der Radius der Sphäre weiter bevorzugt nur geringfügig größer als der Radius des Linsenpigments ist. Weiterhin können auch mehrere Linsenpigmente in einer einzigen sphärischen Mikrokapsel verkapselt vorliegen. Das zur Verkapselung verwendete Material kann insbesondere hydrophob oder hydrophil sein. Wird ein flüssiges Trägermedium im Inneren der Mikrokapsel verwendet, können die Linsenpigmente auf diese Weise frei drehbar, insbesondere frei magnetisch ausrichtbar, bereitgestellt werden. Mikrokapseln, die insbesondere magnetisch ausrichtbare Pigmente aufweisen, sind im Stand der Technik bekannt, siehe z.B. die WO 2012/130370 A1.

Weitere Ausführungsbeispiele sowie Vorteile der Erfindung werden nachfolgend anhand der Figuren erläutert, bei deren Darstellung auf eine maßstabs- und proportionsgetreue Wiedergabe verzichtet wurde, um die Anschaulichkeit zu erhöhen.

Es zeigen:
- Fig. 1: zwei erfindungsgemäße Linsenpigmente in Querschnittansicht;
- Fig. 2: ein weiteres erfindungsgemäßes Linsenpigment in Querschnittansicht;
- Fig. 3a: ein weiteres erfindungsgemäßes Linsenpigment in Schrägansicht;
- Fig. 3b: ein weiteres erfindungsgemäßes Linsenpigment in Draufsicht;
- Fig. 3c: ein weiteres erfindungsgemäßes Linsenpigment in Draufsicht;
- Fig. 3d: ein weiteres erfindungsgemäßes Linsenpigment in Draufsicht;
- Fig. 4: ein weiteres erfindungsgemäßes Linsenpigment in Schrägansicht;
- Fig. 5a: ein weiteres erfindungsgemäßes Linsenpigment in Draufsicht;
- Fig. 5b: ein weiteres erfindungsgemäßes Linsenpigment in Draufsicht;
- Fig. 5c: ein weiteres erfindungsgemäßes Linsenpigment in Draufsicht;
- Fig. 6: ein Beispiel eines Ausschnitts aus einem Schichtaufbau in Querschnittansicht zur Herstellung eines erfindungsgemäßen Linsenpigments;
- Fig. 7: ein weiteres Beispiel eines Ausschnitts aus einem Schichtaufbau in Querschnittansicht zur Herstellung eines erfindungsgemäßen Linsenpigments;
- Fig. 8, 9: ein bevorzugtes Verfahren zum Herstellen des erfindungsgemäßen Linsenpigments gemäß einem Ausführungsbeispiel;
- Fig. 10, 11: ein bevorzugtes Verfahren zum Herstellen des erfindungsgemäßen Linsenpigments gemäß einem weiteren Ausführungsbeispiel.

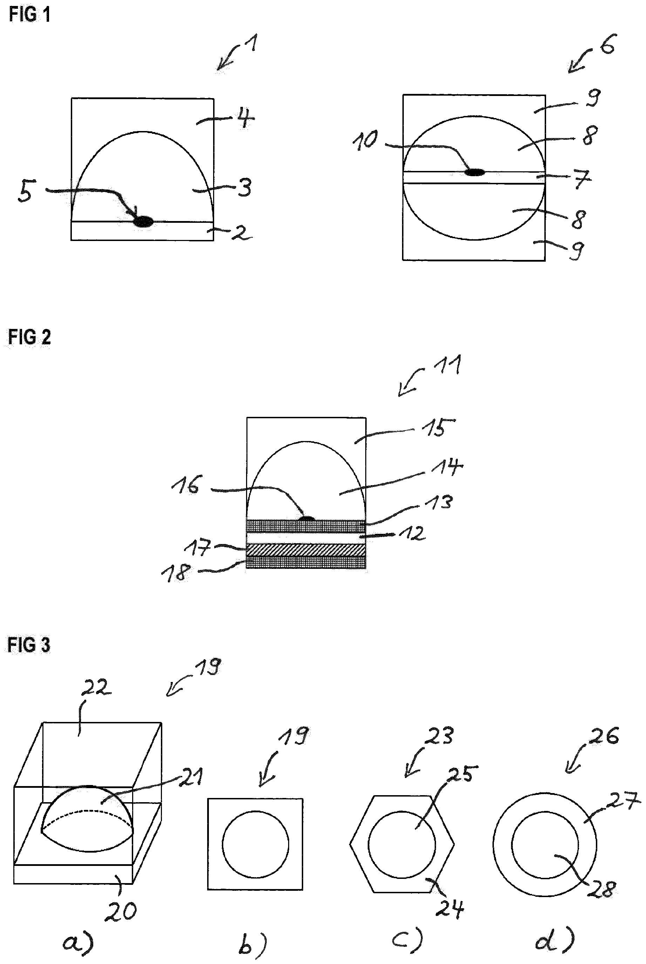

Fig. 1 zeigt auf der linken Seite ein erfindungsgemäßes Linsenpigment 1 in Querschnittansicht. Das Linsenpigment 1 umfasst ein Trägersubstrat 2, im Beispiel eine Trägerfolie, das auf seiner Vorderseite mit einem ersten Kunststoff 3 versehen ist. Der Kunststoff 3 ist in Form einer eine Mikrolinse erzeugenden Erhebung gebildet. Der Kunststoff 3 wird von einem zweiten Kunststoff 4 eingeebnet. Das Trägersubstrat 2 weist zusätzlich eine drucktechnisch erzeugte mikroskopische Struktur 5 auf, die im vorliegenden Beispiel in Form eines Zeichens gebildet ist. Der zweite Kunststoff 4 weist einen Brechungsindex auf, der sich um wenigstens 0,3 vom Brechungsindex des ersten Kunststoffs 3 unterscheidet.

Fig. 1 zeigt auf der rechten Seite ein weiteres erfindungsgemäßes Linsenpigment 6 in Querschnittansicht. Das Linsenpigment 6 ist hinsichtlich der eingesetzten Materialien an das Linsenpigment 1 angelehnt, besitzt aber einen im Wesentlichen spiegelsymmetrischen Aufbau, sodass das Trägersubstrat 7 sowohl auf seiner Vorderseite als auch auf seiner Rückseite versehen ist mit einem ersten Kunststoff 8, der zumindest eine, eine Mikrolinse erzeugende Erhebung aufweist, und einem zweiten, den ersten Kunststoff einebnenden Kunststoff 9. Somit ist eine Orientierung des Pigments 6 nach dem Druckvorgang unerheblich, vorausgesetzt die Ebene des Trägersubstrats 7 befindet sich parallel zur Ebene des mit dem Linsenpigment 6 bedruckten Wertdokumentsubstrats, z.B. eine Banknote. Das Trägersubstrat 7 weist zusätzlich eine drucktechnisch erzeugte mikroskopische Struktur 10 auf, die im vorliegenden Beispiel in Form eines Zeichens gebildet ist.

Fig. 2 zeigt ein weiteres erfindungsgemäßes Linsenpigment 11 in Querschnittansicht. Das Linsenpigment 11 umfasst ein Trägersubstrat 12, im Beispiel eine Trägerfolie, das auf seiner Vorderseite zunächst mit einer opaken metallischen Schicht 13, im Beispiel eine Al-Schicht, und oberhalb der metallischen Schicht 13 mit einem ersten Kunststoff 14 versehen ist. Der Kunststoff 14 ist in Form einer eine Mikrolinse erzeugenden Erhebung gebildet. Der Kunststoff 14 wird von einem zweiten Kunststoff 15 eingeebnet. Die metallische Schicht 13 weist an ihrer Oberseite zusätzlich eine drucktechnisch erzeugte mikroskopische Struktur 16 auf, die im vorliegenden Beispiel in Form eines Zeichens gebildet ist. Der zweite Kunststoff 15 weist einen Brechungsindex auf, der sich um wenigstens 0,3 vom Brechungsindex des ersten Kunststoffs 14 unterscheidet. Das Trägersubstrat 12 weist an seiner Unterseite eine magnetische Schicht 17 und eine weitere opake metallische Schicht 18, im Beispiel eine Al-Schicht, auf. Die magnetische Schicht 17 ist dazu geeignet, dass das Linsenpigment 11 in seiner Orientierung durch ein Magnetfeld beeinflusst werden kann.

Fig. 3a zeigt ein weiteres erfindungsgemäßes Linsenpigment 19 in Schrägansicht. Das Linsenpigment 19 basiert auf einem Trägersubstrat 20, das auf seiner Vorderseite mit einem ersten Kunststoff 21 versehen ist. Der Kunststoff 21 ist in Form einer eine Mikrolinse erzeugenden Erhebung gebildet und wird von einem zweiten Kunststoff 22 eingeebnet. Anders als im Falle des in der Figur 1, links, dargestellten Linsenpigments 1 schließt im Falle des in der Figur 3a gezeigten Linsenpigments 19 die Außenkontur des einen Linsensockel bildenden Trägersubstrats 20 nicht bündig mit der Außenkontur der Mikrolinse 21 ab, sondern das Trägersubstrat 20 weist hinsichtlich der Mikrolinse 21 einen gewissen überstehenden Bereich auf.

Fig. 3b zeigt ein weiteres erfindungsgemäßes Linsenpigment 19 in Draufsicht. Das Linsenpigment 19 basiert auf einem Trägersubstrat 20 mit quadratischer Außenkontur, das auf seiner Vorderseite mit einem eine kreisförmige Mikrolinse erzeugenden ersten Kunststoff versehen ist. Der eine Mikrolinse bildende erste Kunststoff wird von einem zweiten Kunststoff eingeebnet (in der Figur nicht gezeigt).

Fig. 3c zeigt ein weiteres erfindungsgemäßes Linsenpigment 23 in Draufsicht. Das Linsenpigment 23 basiert auf einem Trägersubstrat 24 mit hexagonaler Außenkontur, das auf seiner Vorderseite mit einem eine kreisförmige Mikrolinse 25 erzeugenden ersten Kunststoff versehen ist. Der eine Mikrolinse bildende erste Kunststoff wird von einem zweiten Kunststoff eingeebnet (in der Figur nicht gezeigt).

Fig. 3d zeigt ein weiteres erfindungsgemäßes Linsenpigment 26 in Draufsicht. Das Linsenpigment 26 basiert auf einem Trägersubstrat 27 mit kreisförmiger Außenkontur, das auf seiner Vorderseite mit einem eine kreisförmige Mikrolinse 28 erzeugenden ersten Kunststoff versehen ist. Der eine Mikrolinse bildende erste Kunststoff wird von einem zweiten Kunststoff eingeebnet (in der Figur nicht gezeigt).

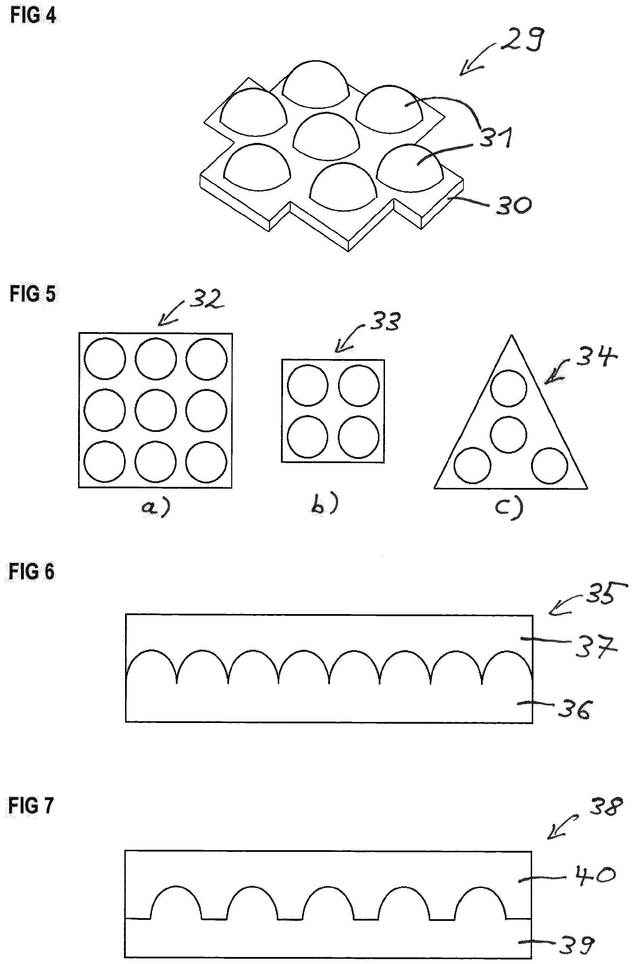

Die Figur 4 zeigt ein weiteres erfindungsgemäßes Linsenpigment 29 in Schrägansicht. Das Linsenpigment 29 basiert auf einem einen Linsensockel bildenden Trägersubstrat 30, das in Form eines unregelmäßigen Vielecks gebildet ist. Das Trägersubstrat 30 weist an seiner Vorderseite sieben jeweils eine Mikrolinse erzeugende Erhebungen 31 auf, die jeweils aus einem ersten Kunststoff gebildet sind. Der die sieben Mikrolinsen bildende erste Kunststoff wird von einem zweiten Kunststoff eingeebnet (in der Figur nicht gezeigt). Der zweite Kunststoff hat somit die gleiche Außenkontur wie das Trägersubstrat 30.

Die Figuren 5a, 5b und 5c zeigen drei weitere erfindungsgemäße Linsenpigmente 32, 33 und 34, die jeweils eine Mehrzahl von jeweils eine Mikrolinse erzeugenden Erhebungen aufweisen. Im Falle des Linsenpigments 32 sind neun Mikrolinsen vorhanden, im Falle der Linsenpigmente 33 und 34 jeweils vier Mikrolinsen. Die Linsenpigmente 32 und 33 weisen jeweils eine quadratische Außenkontur auf, das Linsenpigment 34 besitzt eine dreieckige Außenkontur.

In den in der Figur 5 gezeigten Linsenpigmenten 32, 33 und 34 wird der die Mikrolinsen bildende erste Kunststoff von einem zweiten Kunststoff eingeebnet (in der Figur nicht gezeigt). Der zweite Kunststoff hat somit die gleiche Außenkontur wie das Trägersubstrat.

Die Figur 6 zeigt ein Beispiel eines Ausschnitts aus einem Schichtaufbau 35 in Querschnittansicht zur Herstellung eines erfindungsgemäßen Linsenpigments. Der Schichtaufbau 35 enthält einen ersten Kunststoff 36 mit jeweils eine Mikrolinse erzeugenden Erhebungen. Die Mikrolinsen grenzen dabei direkt aneinander an. Der erste Kunststoff 36 wird von einem zweiten Kunststoff 37 eingeebnet. Das Trägersubstrat und gegebenenfalls auf dem Trägersubstrat vorhandene Mikrostrukturen sind in der Figur 6 nicht gezeigt.

Die Figur 7 zeigt ein weiteres Beispiel eines Ausschnitts aus einem Schichtaufbau 38 in Querschnittansicht zur Herstellung eines erfindungsgemäßen Linsenpigments. Der Schichtaufbau 38 enthält einen ersten Kunststoff 39 mit jeweils eine Mikrolinse erzeugenden Erhebungen. Die Mikrolinsen sind dabei nicht direkt aneinander angrenzend, sondern voneinander beabstandet angeordnet. Der erste Kunststoff 39 wird von einem zweiten Kunststoff 40 eingeebnet. Das Trägersubstrat und gegebenenfalls auf dem Trägersubstrat vorhandene Mikrostrukturen sind in der Figur 7 nicht gezeigt.

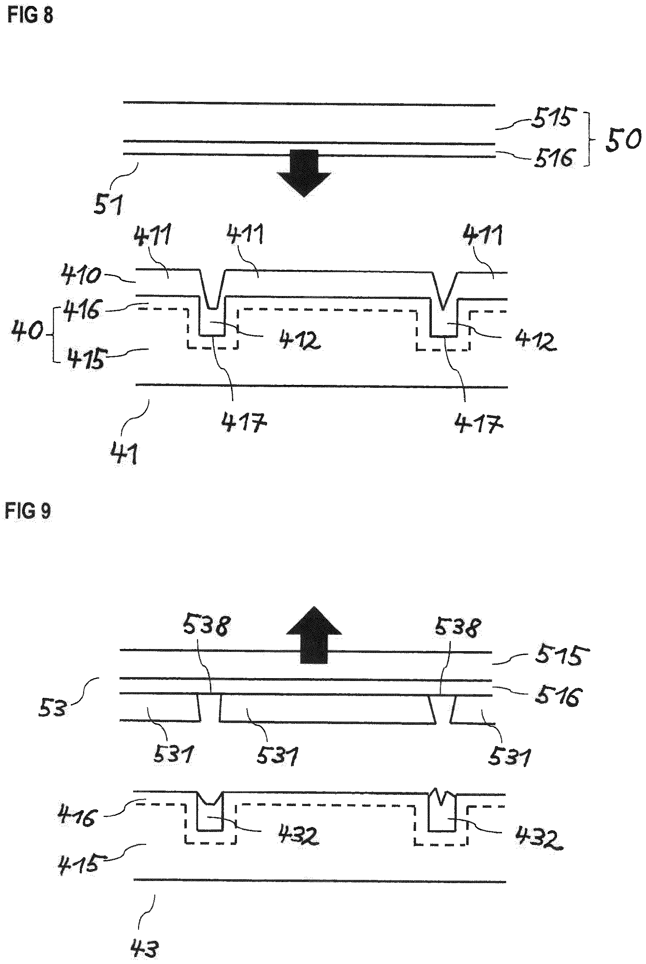

Die Figuren 8 und 9 zeigen ein bevorzugtes Verfahren zum Herstellen des erfindungsgemäßen Linsenpigments gemäß einem Ausführungsbeispiel.

In der in Fig. 3 im Querschnitt gezeigten Ausgestaltung ist das Ausgangssubstrat 40 mit einem Relief als Vorstrukturierung versehen. Die Reliefstruktur wird durch vertiefte Abschnitte 417 gebildet. Das Ausgangssubstrat 40 umfasst zumindest eine Ausgangssubstratschicht 415, insbesondere in Form einer PET-Folie, und die Prägelackschicht 416. Entsprechend der Reliefstruktur bilden sich Pigmentabschnitte 411 und Restabschnitte 412 der Pigmentschicht aus. Mit dem Begriff "Pigmentschicht" ist, wie weiter oben bereits dargelegt wurde, die das Linsenpigment bildende Schichtenfolge gemeint, umfassend zumindest das einen Linsensockel bildende Trägersubstrat, das auf seiner Vorderseite versehen ist mit einem ersten Kunststoff, der zumindest eine, eine Mikrolinse erzeugende Erhebung aufweist, und einen zweiten, den ersten Kunststoff einebnenden Kunststoff. Die Pigmentabschnitte 411 liegen auf den erhabenen Abschnitten der Reliefstruktur und die Restabschnitte 412 in den Vertiefungen 417. Die Pigmentabschnitte 411 sind bereits entsprechend der Kontur der späteren Linsenpigmente vorstrukturiert. Die zwischen den Pigmentabschnitten 411 liegenden Restabschnitte 412 weisen eine zu den Linsenpigmenten inverse Kontur auf.

Ebenso in Fig. 8 dargestellt ist ein Zwischensubstrat 50, welches eine Zwischensubstratschicht 515, beispielsweise eine weitere PET-Folie, und eine unstrukturierte Haftschicht 516 umfasst. Die Zwischensubstratschicht 50 wird - wie durch den Pfeil angedeutet - mit der Pigmentschicht 410 in Kontakt gebracht. In dem Schritt kann Druck ausgeübt werden und die Temperatur erhöht werden. Die Pigmentschicht 410 haftet aufgrund der Reliefstruktur mit seinen Pigmentabschnitten 411 an der Haftschicht 516 des Zwischensubstrates an. Die Restabschnitte 412 kommen gar nicht in Kontakt mit der Haftschicht 516 oder zumindest nicht ausreichend, um an dieser anzuhaften.

Das Ausgangssubtrat und das Zwischenträgersubstrat werden wieder voneinander getrennt, wie es in Fig. 9 - wiederum durch einen Pfeil - angedeutet ist. Fig. 9 zeigt das Ausgangssubstrat einschließlich Resten der Pigmentschicht 43 und das Zwischensubstrat einschließlich Pigmentabschnitten 53 bereits im getrennten Zustand.

Beim Trennen der beiden Substrate bricht die Pigmentschicht. Sie wird strukturiert in die einzelnen Pigmente, welche als Pigmentabschnitte 531 vorliegen. Die Pigmentabschnitte 531 haften an der Haftschicht 516 des Zwischensubstrates. Zwischen den Pigmentabschnitten 531 gibt es auf dem Zwischensubstrat 53 freie Zwischensubstratoberflächen 538. Die Restabschnitte 432 der Pigmentschicht liegen nach dem Trennen weiterhin auf dem Ausgangssubstrat 415, 416 vor.

Die Pigmentabschnitte 531 werden anschließend vom Zwischensubstrat gelöst und liegen dann als Vielzahl von Linsenpigmenten vor. Die Linsenpigmente werden zu einer Druckfarbe weiterverarbeitet.

Die Pigmentabschnitte sind zu dem Zeitpunkt des Strukturierens der Pigmentschicht in Pigmentabschnitte - durch Brechen und Lösen der Pigmentabschnitte von dem Ausgangssubstrat - durch das Zwischensubstrat gegen Zerbrechen geschützt. Die Pigmentabschnitte werden keiner unnötigen Kraft ausgesetzt und können somit wesentlich dünner oder filigraner gestaltet werden als herkömmlich.

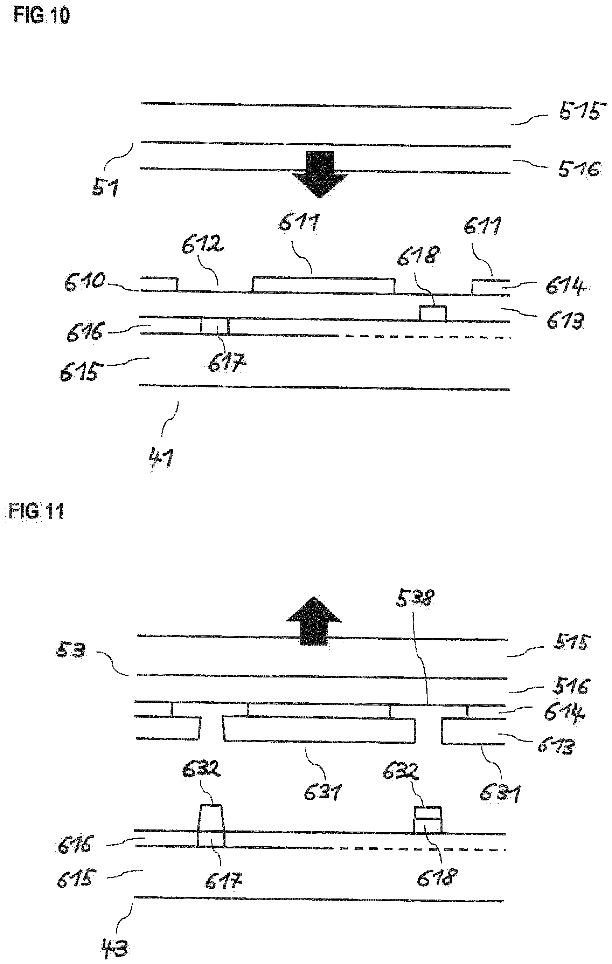

In der Ausgestaltung nach Fig. 8 und 9 ist die Pigmentschicht durch eine Reliefstruktur vorstrukturiert, um die Kontur des Pigments vorzugeben. Fig. 10 und 11 zeigen alternative Ausgestaltungen, in welchen eine haftungsbestimmende Schicht strukturiert ist, um die Kontur vorzugeben.

Das Ausgangssubstrat mit Pigmentschicht 41 umfasst in Fig. 10 eine Substratschicht 616, 617, 618 und eine Pigmentschicht 610, die ihrerseits zwei Teilschichten 613, 614 enthält. Auf der PET-Folie 615 wird eine strukturierte haftungsbestimmende Schicht vorgesehen, die als durchgehende AntiHaftschicht 616 mit Haftschichtabschnitten 617 oder als auf der Substratschicht 615 (oder der Antihaftschicht 616) angeordnete Haftschicht 618 ausgebildet sein kann. Die Pigmentschicht 610 umfasst die durchgehende Pigmentteilschicht 613 sowie eine nicht-durchgehende (sondern bereits strukturierte) Pigmentteilschicht 614. Pigmentabschnitte 611 der Pigmentschicht und Restabschnitte 612 sind durch die Haftungsstruktur 617, 618 vorgegeben.

Das Ausgangssubstrat 41 wird wie in Fig. 10 durch den Pfeil symbolisch dargestellt mit der Haftschicht 516 auf dem Zwischensubstrat in Kontakt gebracht. Die Haftschicht 516 kann dabei auch mit den Restabschnitten 612, also nicht nur den Pigmentabschnitten, in Kontakt kommen. Die Haftschicht 516 und die Haftstruktur 617, 618 sind so aufeinander abgestimmt, dass die Pigmentschicht stärker an der Haftstruktur 617, 618 anhaftet. Die Pigmentschicht wird wiederum beim Trennen der Substrate strukturiert in die Pigment(abschnitt)e.

Fig. 11 zeigt nach dem Trennen der Substrate das Ausgangssubstrat mit Pigmentschichtresten 43 und das Zwischensubstrat einschließlich Pigmentabschnitten 53. Auf der Haftstruktur 617, 618 bleiben Restabschnitte 632 der Pigmentschicht haften. Die Pigmentabschnitte 631 bleiben am Zwischensubstrat haften, haben sich also beim Trennen vom Ausgangssubstrat bzw. dessen Antihaft-Schicht 616 gelöst. Zwischen den Pigmentabschnitten bleiben freie Abschnitte 538 der Haftschicht 516. Die Pigmentabschnitte 631 umfassen die zwei Teilschichten 613, 614. Die Pigmentabschnitte 631 werden (nach dem Trennen) von der Zwischensubstratschicht 515, 516 gelöst und als Pigmente, insbesondere zu einer Druckfarbe, weiter verarbeitet.

Die Pigmentabschnitte sind zu dem Zeitpunkt des Strukturierens der Pigmentschicht in Pigmentabschnitte - durch Brechen und Lösen der Pigmentabschnitte von dem Ausgangssubstrat - durch das Zwischensubstrat gegen Zerbrechen geschützt. Die Pigmentabschnitte werden keiner unnötigen Kraft ausgesetzt und können somit wesentlich dünner oder filigraner gestaltet werden als herkömmlich.

In der Ausgestaltung nach Fig. 8 und 9 ist die Pigmentschicht durch eine Reliefstruktur vorstrukturiert, um die Kontur des Pigments vorzugeben. Fig. 10 und 11 zeigen alternative Ausgestaltungen, in welchen eine haftungsbestimmende Schicht strukturiert ist, um die Kontur vorzugeben.

Das Ausgangssubstrat mit Pigmentschicht 41 umfasst in Fig. 10 eine Substratschicht 616, 617, 618 und eine Pigmentschicht 610, die ihrerseits zwei Teilschichten 613, 614 enthält. Auf der PET-Folie 615 wird eine strukturierte haftungsbestimmende Schicht vorgesehen, die als durchgehende AntiHaftschicht 616 mit Haftschichtabschnitten 617 oder als auf der Substratschicht 615 (oder der Antihaftschicht 616) angeordnete Haftschicht 618 ausgebildet sein kann. Die Pigmentschicht 610 umfasst die durchgehende Pigmentteilschicht 613 sowie eine nicht-durchgehende (sondern bereits strukturierte) Pigmentteilschicht 614. Pigmentabschnitte 611 der Pigmentschicht und Restabschnitte 612 sind durch die Haftungsstruktur 617, 618 vorgegeben.

Das Ausgangssubstrat 41 wird wie in Fig. 10 durch den Pfeil symbolisch dargestellt mit der Haftschicht 516 auf dem Zwischensubstrat in Kontakt gebracht. Die Haftschicht 516 kann dabei auch mit den Restabschnitten 612, also nicht nur den Pigmentabschnitten, in Kontakt kommen. Die Haftschicht 516 und die Haftstruktur 617, 618 sind so aufeinander abgestimmt, dass die Pigmentschicht stärker an der Haftstruktur 617, 618 anhaftet. Die Pigmentschicht wird wiederum beim Trennen der Substrate strukturiert in die Pigment(abschnitt)e.

Fig. 11 zeigt nach dem Trennen der Substrate das Ausgangssubstrat mit Pigmentschichtresten 43 und das Zwischensubstrat einschließlich Pigmentabschnitten 53. Auf der Haftstruktur 617, 618 bleiben Restabschnitte 632 der Pigmentschicht haften. Die Pigmentabschnitte 631 bleiben am Zwischensubstrat haften, haben sich also beim Trennen vom Ausgangssubstrat bzw. dessen Antihaft-Schicht 616 gelöst. Zwischen den Pigmentabschnitten bleiben freie Abschnitte 538 der Haftschicht 516. Die Pigmentabschnitte 631 umfassen die zwei Teilschichten 613, 614. Die Pigmentabschnitte 631 werden (nach dem Trennen) von der Zwischensubstratschicht 515, 516 gelöst und als Pigmente, insbesondere zu einer Druckfarbe, weiter verarbeitet.

## Patentansprüche

1. Linsenpigment (1, 6, 11, 19, 23, 26, 29, 32, 33, 34), geeignet für die drucktechnische Herstellung von Wertdokumenten, umfassend:
- ein einen Linsensockel bildendes Trägersubstrat (2, 12, 20, 24, 27, 30), das auf seiner Vorderseite versehen ist mit einem ersten Kunststoff (3, 8, 14, 21, 25, 28, 31, 37, 40), der zumindest eine, eine Mikrolinse erzeugende Erhebung aufweist; und
- einen zweiten, den ersten Kunststoff einebnenden Kunststoff (4, 9, 15, 22, 37, 40), wobei der zweite Kunststoff einen Brechungsindex aufweist, der sich um wenigstens 0,3 vom Brechungsindex des ersten Kunststoffs unterscheidet.

2. Linsenpigment (1, 6, 11, 19, 23, 26, 29, 32, 33, 34) nach Anspruch 1, wobei der erste Kunststoff (3, 8, 14, 21, 25, 28, 31, 37, 40) eine Mehrzahl von jeweils eine Mikrolinse erzeugenden Erhebungen aufweist, wobei die Mehrzahl vorzugsweise eine ganze Zahl in einem Bereich von 1 bis 12, weiter bevorzugt in einem Bereich von 1 bis 9 und insbesondere bevorzugt in einem Bereich von 1 bis 7 annimmt.

3. Linsenpigment (1, 6, 11, 19, 23, 26, 29, 32, 33, 34) nach Anspruch 1 oder 2, wobei das Linsenpigment einen im Wesentlichen spiegelsymmetrischen Aufbau besitzt, sodass das Trägersubstrat (2, 12, 20, 24, 27, 30) sowohl auf seiner Vorderseite als auch auf seiner Rückseite versehen ist mit einem ersten Kunststoff (3, 8, 14, 21, 25, 28, 31, 37, 40), der zumindest eine, eine Mikrolinse erzeugende Erhebung aufweist, und einem zweiten, den ersten Kunststoff einebnenden Kunststoff (4, 9, 15, 22, 37, 40).

4. Linsenpigment (1, 6, 11, 19, 23, 26, 29, 32, 33, 34) nach einem der Ansprüche 1 bis 3, wobei das einen Linsensockel bildende Trägersubstrat (2, 12, 20, 24, 27, 30) auf seiner Vorderseite und/oder seiner Rückseite mit mikroskopischen Strukturen versehen ist, wobei die mikroskopischen Strukturen für den Betrachter infolge der fokussierenden Wirkung der Mikrolinsen in Form von Zeichen, Mustern oder Codierungen erkennbar sind.

5. Linsenpigment (1, 6, 11, 19, 23, 26, 29, 32, 33, 34) nach Anspruch 4, wobei die mikroskopischen Strukturen drucktechnisch erzeugte mikroskopische Strukturen oder mittels Prägen erzeugte mikroskopische Strukturen sind.

6. Linsenpigment (1, 6, 11, 19, 23, 26, 29, 32, 33, 34) nach einem der Ansprüche 1 bis 3, wobei die Vorderseite und/oder die Rückseite des einen Linsensockel bildenden Trägersubstrats (2, 12, 20, 24, 27, 30), das mit dem ersten Kunststoff (3, 8, 14, 21, 25, 28, 31, 37, 40) und gegebenenfalls mit mikroskopischen Strukturen versehen ist, eine opake Schicht, vorzugsweise eine metallische Schicht oder eine Druckschicht, aufweist.

7. Linsenpigment (1, 6, 11, 19, 23, 26, 29, 32, 33, 34) nach Anspruch 6, wobei die opake Schicht durch ein Dünnschichtelement gebildet ist, wobei das Dünnschichtelement vorzugsweise ein farbkippendes Dünnschichtelement ist, insbesondere mit einem eine Reflektorschicht, eine dielektrische Abstandsschicht und eine Absorberschicht aufweisenden Aufbau.

8. Linsenpigment (1, 6, 11, 19, 23, 26, 29, 32, 33, 34) nach einem der Ansprüche 4 oder 5, wobei die Mikrolinsen in Form eines ersten Rasters angeordnet sind und die mikroskopischen Strukturen in Form eines zweiten Rasters angeordnet sind, wobei die Rasterweite des ersten und zweiten Rasters in einem Bereich von 3 µm bis 50 µm, vorzugsweise in einem Bereich von 5 µm bis 35 µm und insbesondere bevorzugt in einem Bereich von 10 µm bis 20 µm liegt.

9. Linsenpigment (1, 6, 11, 19, 23, 26, 29, 32, 33, 34) nach einem der Ansprüche 1 bis 8, wobei das einen Linsensockel bildende Trägersubstrat (2, 12, 20, 24, 27, 30) eine runde Form, insbesondere eine kreisförmige oder elliptische Form, oder die Form eines Vielecks, insbesondere eine quadratische, rechteckige, dreieckige, pentagonale oder hexagonale Form aufweist.

10. Linsenpigment (1, 6, 11, 19, 23, 26, 29, 32, 33, 34) nach einem der Ansprüche 1 bis 9, wobei das einen Linsensockel bildende Trägersubstrat (2, 12, 20, 24, 27, 30) zusätzlich eine magnetische Schicht aufweist.

11. Verfahren zum Herstellen des Linsenpigments (1, 6, 11, 19, 23, 26, 29, 32, 33, 34) nach einem der Ansprüche 1 bis 10, umfassend:
- das Bereitstellen eines Trägersubstrats (2, 12, 20, 24, 27, 30);
- das Versehen des Trägersubstrats (2, 12, 20, 24, 27, 30) mit einem ersten Kunststoff (3, 8, 14, 21, 25, 28, 31, 37, 40);
- das Strukturieren des ersten Kunststoffs (3, 8, 14, 21, 25, 28, 31, 37, 40), um auf diese Weise Erhebungen zu bilden, die jeweils eine Mikrolinse erzeugen;
- das Aufbringen eines zweiten, den ersten Kunststoff einebnenden Kunststoffs (4, 9, 15, 22, 37, 40), wobei der zweite Kunststoff einen Brechungsindex aufweist, der sich um wenigstens 0,3 vom Brechungsindex des ersten Kunststoffs unterscheidet;
- das Zerbrechen des in den vorangehenden Schritten erzeugten Schichtaufbaus in eine Vielzahl von Linsenpigmenten.

12. Verfahren nach Anspruch 11, wobei das Strukturieren des ersten Kunststoffs (3, 8, 14, 21, 25, 28, 31, 37, 40) mittels eines Verprägens erfolgt.

13. Wertdokument, insbesondere eine Banknote, das mit Linsenpigmenten (1, 6, 11, 19, 23, 26, 29, 32, 33, 34) gemäß einem der Ansprüche 1 bis 10 bedruckt ist.

14. Wertdokument nach Anspruch 13, wobei die Linsenpigmente (1, 6, 11, 19, 23, 26, 29, 32, 33, 34) in einem Fensterbereich des Wertdokuments angeordnet sind.

15. Druckfarbe, umfassend Linsenpigmente (1, 6, 11, 19, 23, 26, 29, 32, 33, 34) gemäß einem der Ansprüche 1 bis 10.

## Claims

1. Lens pigment (1, 6, 11, 19, 23, 26, 29, 32, 33, 34), suitable for the production of valuable documents by printing technology, comprising:
- a carrier substrate (2, 12, 20, 24, 27, 30), which forms a lens base and which is provided on its front side with a first plastic (3, 8, 14, 21, 25, 28, 31, 37, 40) having at least one elevation that creates a microlens; and
- a second plastic (4, 9, 15, 22, 37, 40) levelling the first plastic, wherein the second plastic has a refractive index that differs from the refractive index of the first plastic by at least 0.3.

2. Lens pigment (1, 6, 11, 19, 23, 26, 29, 32, 33, 34) according to Claim 1, wherein the first plastic (3, 8, 14, 21, 25, 28, 31, 37, 40) has a plurality of elevations that each create a microlens, wherein the plurality preferably constitutes an integer in a range of 1 to 12, with further preference in a range of 1 to 9 and with particular preference in a range of 1 to 7.

3. Lens pigment (1, 6, 11, 19, 23, 26, 29, 32, 33, 34) according to Claim 1 or 2, wherein the lens pigment has a substantially mirror-symmetrical construction, such that the carrier substrate (2, 12, 20, 24, 27, 30) is provided both on its front side and on its rear side with a first plastic (3, 8, 14, 21, 25, 28, 31, 37, 40) having at least one elevation that creates a microlens, and a second plastic (4, 9, 15, 22, 37, 40) levelling the first plastic.

4. Lens pigment (1, 6, 11, 19, 23, 26, 29, 32, 33, 34) according to any of Claims 1 to 3, wherein the carrier substrate (2, 12, 20, 24, 27, 30) forming a lens base is provided with microscopic structures on its front side and/or its rear side, wherein the microscopic structures are recognizable for the observer in the form of characters, patterns or codings owing to the focusing effect of the microlenses.

5. Lens pigment (1, 6, 11, 19, 23, 26, 29, 32, 33, 34) according to Claim 4, wherein the microscopic structures are microscopic structures created by printing technology or microscopic structures created by means of embossing.

6. Lens pigment (1, 6, 11, 19, 23, 26, 29, 32, 33, 34) according to any of Claims 1 to 3, wherein the front side and/or the rear side of the carrier substrate (2, 12, 20, 24, 27, 30) forming a lens base, said carrier substrate being provided with the first plastic (3, 8, 14, 21, 25, 28, 31, 37, 40) and optionally with microscopic structures, have/has an opaque layer, preferably a metallic layer or a printed layer.

7. Lens pigment (1, 6, 11, 19, 23, 26, 29, 32, 33, 34) according to Claim 6, wherein the opaque layer is formed by a thin-film element, wherein the thin-film element is preferably a colour-shifting thin-film element, in particular with a construction having a reflector layer, a dielectric spacer layer and an absorber layer.

8. Lens pigment (1, 6, 11, 19, 23, 26, 29, 32, 33, 34) according to either of Claims 4 and 5, wherein the microlenses are arranged in the form of a first grid and the microscopic structures are arranged in the form of a second grid, wherein the grid pitch of the first and second grids lies in a range of 3 µm to 50 µm, preferably in a range of 5 µm to 35 µm and with particular preference in a range of 10 µm to 20 µm.

9. Lens pigment (1, 6, 11, 19, 23, 26, 29, 32, 33, 34) according to any of Claims 1 to 8, wherein the carrier substrate (2, 12, 20, 24, 27, 30) forming a lens base has a round shape, in particular a circular or elliptic shape, or the shape of a polygon, in particular a square, rectangular, triangular, pentagonal or hexagonal shape.

10. Lens pigment (1, 6, 11, 19, 23, 26, 29, 32, 33, 34) according to any of Claims 1 to 9, wherein the carrier substrate (2, 12, 20, 24, 27, 30) forming a lens base additionally has a magnetic layer.

11. Method for producing the lens pigment (1, 6, 11, 19, 23, 26, 29, 32, 33, 34) according to any of Claims 1 to 10, comprising:
- providing a carrier substrate (2, 12, 20, 24, 27, 30);
- providing the carrier substrate (2, 12, 20, 24, 27, 30) with a first plastic (3, 8, 14, 21, 25, 28, 31, 37, 40);
- structuring the first plastic (3, 8, 14, 21, 25, 28, 31, 37, 40) in order in this way to form elevations that each create a microlens;
- applying a second plastic (4, 9, 15, 22, 37, 40) levelling the first plastic, wherein the second plastic has a refractive index that differs from the refractive index of the first plastic by at least 0.3;
- breaking up the layer construction created in the preceding steps into a multiplicity of lens pigments.

12. Method according to Claim 11, wherein structuring the first plastic (3, 8, 14, 21, 25, 28, 31, 37, 40) is effected by means of embossing.

13. Valuable document, in particular a banknote, which is printed with lens pigments (1, 6, 11, 19, 23, 26, 29, 32, 33, 34) according to any of Claims 1 to 10.

14. Valuable document according to Claim 13, wherein the lens pigments (1, 6, 11, 19, 23, 26, 29, 32, 33, 34) are arranged in a window region of the valuable document.

15. Printing ink, comprising lens pigments (1, 6, 11, 19, 23, 26, 29, 32, 33, 34) according to any of Claims 1 to 10.

## Revendications

1. Pigment de lentille (1, 6, 11, 19, 23, 26, 29, 32, 33, 34), adapté à la technique d'impression de documents de valeur, ledit pigment comprenant :
- un substrat porteur (2, 12, 20, 24, 27, 30) qui forme une base de lentille et qui est pourvu sur sa face avant d'une première substance synthétique (3, 8, 14, 21, 25, 28, 31, 37, 40), qui présente au moins une élévation générant une microlentille ; et
- une deuxième substance synthétique qui nivelle la première substance synthétique (4, 9, 15, 22, 37, 40), la deuxième substance synthétique ayant un indice de réfraction qui est différent de l'indice de réfraction de la première substance synthétique d'au moins 0,3.

2. Pigment de lentille (1, 6, 11, 19, 23, 26, 29, 32, 33, 34) selon la revendication 1, la première substance synthétique (3, 8, 14, 21, 25, 28, 31, 37, 40) comportant une pluralité d'élévations générant chacune une microlentille, la pluralité étant de préférence un nombre entier dans une gamme allant de 1 à 12, plus préférablement dans une gamme allant de 1 à 9 et de manière particulièrement préférée dans une gamme allant de 1 à 7.

3. Pigment de lentille (1, 6, 11, 19, 23, 26, 29, 32, 33, 34) selon la revendication 1 ou 2, le pigment de lentille comportant une structure sensiblement à symétrie spéculaire, de sorte que le substrat porteur (2, 12, 20, 24, 27, 30) soit pourvu aussi bien sur sa face avant que sur sa face arrière d'une première substance synthétique (3, 8, 14, 21, 25, 28, 31, 37, 40), qui comporte au moins une élévation générant une microlentille et d'une deuxième substance synthétique (4, 9, 15, 22, 37, 40) qui nivelle la première substance synthétique.

4. Pigment de lentille (1, 6, 11, 19, 23, 26, 29, 32, 33, 34) selon l'une des revendications 1 à 3, le substrat porteur (2, 12, 20, 24, 27, 30) qui forme une base de lentille étant pourvu de structures microscopiques sur sa face avant et/ou sa face arrière, les structures microscopiques étant visibles à l'observateur sous la forme de caractères, de motifs ou de codages en raison de l'effet de focalisation des microlentilles.

5. Pigment de lentille (1, 6, 11, 19, 23, 26, 29, 32, 33, 34) selon la revendication 4, les structures microscopiques étant des structures microscopiques générées par une technique d'impression ou des structures microscopiques générées par gaufrage.

6. Pigment de lentille (1, 6, 11, 19, 23, 26, 29, 32, 33, 34) selon l'une des revendications 1 à 3, la face avant et/ou la face arrière du substrat porteur (2, 12, 20, 24, 27, 30) qui forme une base de lentille et qui est pourvu de la première substance synthétique (3, 8, 14, 21, 25, 28, 31, 37, 40) et éventuellement de structures microscopiques, comportent une couche opaque, de préférence une couche métallique ou une couche d'impression.

7. Pigment de lentille (1, 6, 11, 19, 23, 26, 29, 32, 33, 34) selon la revendication 6, la couche opaque étant formée par un élément à couche mince, l'élément à couche mince étant de préférence un élément à couche mince à changement de couleur, pourvu en particulier d'une structure comportant une couche réflectrice, une couche d'espacement diélectrique et une couche absorbante.

8. Pigment de lentille (1, 6, 11, 19, 23, 26, 29, 32, 33, 34) selon l'une des revendications 4 ou 5, les microlentilles étant disposées sous la forme d'une première trame et les structures microscopiques étant disposées sous la forme d'une deuxième trame, la largeur de trame des première et deuxième trames étant dans une gamme allant de 3 µm à 50 µm, de préférence dans une gamme allant de 5 µm à 35 µm et de manière particulièrement préférée dans une gamme allant de 10 µm à 20 µm.

9. Pigment de lentille (1, 6, 11, 19, 23, 26, 29, 32, 33, 34) selon l'une des revendications 1 à 8, le substrat porteur (2, 12, 20, 24, 27, 30) qui forme une base de lentille ayant une forme ronde, en particulier une forme circulaire ou elliptique, ou une forme polygonale, en particulier carrée, rectangulaire, triangulaire, pentagonale ou hexagonale.

10. Pigment de lentille (1, 6, 11, 19, 23, 26, 29, 32, 33, 34) selon l'une des revendications 1 à 9, le substrat porteur (2, 12, 20, 24, 27, 30) qui forme une base de lentille comportant en outre une couche magnétique.

11. Procédé de fabrication du pigment de lentille (1, 6, 11, 19, 23, 26, 29, 32, 33, 34) selon l'une des revendications 1 à 10, ledit procédé comprenant les étapes suivantes :
- fournir un substrat porteur (2, 12, 20, 24, 27, 30) ;
- munir le substrat porteur (2, 12, 20, 24, 27, 30) d'une première substance synthétique (3, 8, 14, 21, 25, 28, 31, 37, 40) ;
- structurer la première substance synthétique (3, 8, 14, 21, 25, 28, 31, 37, 40) afin de former des élévations qui génèrent chacune une microlentille ;
- appliquer une deuxième substance synthétique qui nivelle la première substance synthétique (4, 9, 15, 22, 37, 40), la deuxième substance synthétique ayant un indice de réfraction qui est différent de l'indice de réfraction de la première substance synthétique d'au moins 0,3 ;
- briser la structure de couches générée lors des étapes précédentes en un grand nombre de pigments de lentilles.

12. Procédé selon la revendication 11, la première substance synthétique (3, 8, 14, 21, 25, 28, 31, 37, 40) étant structurée par estampage.

13. Document de valeur, notamment billet de banque, imprimé avec des pigments de lentille (1, 6, 11, 19, 23, 26, 29, 32, 33, 34) selon l'une des revendications 1 à 10.

14. Document de valeur selon la revendication 13, les pigments de lentille (1, 6, 11, 19, 23, 26, 29, 32, 33, 34) étant disposés dans une zone formant fenêtre du document de valeur.

15. Encre d'impression comprenant des pigments de lentille (1, 6, 11, 19, 23, 26, 29, 32, 33, 34) selon l'une des revendications 1 à 10.
